# EUROPÄISCHE PATENTSCHRIFT

(11) **EP 3 867 712 B1**
(45) Veröffentlichungstag und Bekanntmachung des Hinweises auf die Patenterteilung: **23.03.2022**
(21) Anmeldenummer: 19809431.0
(22) Anmeldetag: 22.11.2019
(51) Int. Cl.: G05B 19/4061, B65G 54/02, B66F 9/06, G05B 19/418, G05D 1/02

(54) **VORRICHTUNG UND VERFAHREN ZUM VERMEIDEN EINER KOLLISION BEIM ANTREIBEN VON WENIGSTENS ZWEI MOVERN AUF EINER ANTRIEBSFLÄCHE**
DEVICE AND METHOD FOR PREVENTING A COLLISION WHEN DRIVING AT LEAST TWO MOVING ELEMENTS ON A DRIVING SURFACE
DISPOSITIF ET PROCÉDÉ PERMETTENT D'ÉVITER UNE COLLISION LORS DE L'ENTRAÎNEMENT D'AU MOINS DEUX ÉLÉMENTS DE DÉPLACEMENT SUR UNE SURFACE D'ENTRAÎNEMENT

(30) Priorität: 26.11.2018 DE 102018129732
(43) Veröffentlichungstag der Anmeldung: 25.08.2021
(73) Patentinhaber: Beckhoff Automation GmbH, 33415 Verl (DE)
(72) Erfinder: PENNEKAMP, Hubertus, 33334 Gütersloh (DE); LUTHE, Thomas, 33415 Verl (DE); WIEDNER, Eva, 33161 Hövelhof (DE); WEBER, Tobias, 33332 Gütersloh (DE); NEUMANN, Klaus, 33330 Gütersloh (DE); WEDDEMANN, Alexander, 59558 Lippstadt (DE)
(74) Vertreter: Patentanwaltskanzlei WILHELM & BECK
(86) Internationale Anmeldenummer: PCT/EP2019/082257
(87) Internationale Veröffentlichungsnummer: WO 2020/109168

(56) Entgegenhaltungen:
- EP-A1- 3 096 144
- DE-A1-102009 008 529
- US-A1- 2005 107 909
- N N: "Flying Motion XPlanar", , 1. November 2018 (2018-11-01), Seiten 1-28, XP055668904, Gefunden im Internet: URL:https://download.beckhoff.com/download /Document/catalog/Beckhoff_XPlanar_d.pdf [gefunden am 2020-02-14]

## Beschreibung

Die Erfindung betrifft ein Verfahren und eine Vorrichtung zum Vermeiden einer Kollision beim Antreiben von wenigstens zwei Movern auf einer Antriebsfläche.

Planare Antriebssysteme können unter anderem in der Automatisierungstechnik, insbesondere der Fertigungstechnik, der Handhabungstechnik und der Verfahrenstechnik eingesetzt werden. Mittels planarer Antriebssysteme kann ein bewegliches Element, ein sogenannter Mover, einer Anlage einer Maschine in mindestens zwei linear unabhängigen Richtungen bewegt oder positioniert werden. Planare Antriebssysteme können einen permanenterregten elektromagnetischen Planarmotor mit einem planaren Stator und einem auf dem Stator in mindestens zwei Richtungen beweglichen Läufer, das heißt den Mover, umfassen.

Bei einem permanenterregten elektromagnetischen Planarmotor wird dadurch eine Antriebskraft auf den Mover ausgeübt, dass stromdurchflossene Leiter mit Antriebsmagneten einer Magnetanordnung magnetisch wechselwirken. Die Erfindung betrifft insbesondere Ausgestaltungen von planaren Antriebsvorrichtungen, bei denen die Antriebsmagneten eines elektrischen Planarmotors an dem Mover und die stromdurchflossenen Leiter des Planarmotors in einer ortsfest angeordneten Antriebsfläche angeordnet sind.

Aus EP 3096144 A1 eine gattungsgemäße Vorrichtung bzw. ein gattungsgemäßes Verfahren bekannt, bei dem in automatischen Laborsystem Probenträger vorgesehen sind, die Proben tragen. Den Proben sind Prioritäten zugeordnet. Die Probenträger werden entsprechend der Priorität der Proben zu einer Verarbeitungsstation gefahren. Weiterer Stand der Technik ist der DE 102009008529 A1 zu entnehmen.

Die Aufgabe der Erfindung besteht darin, eine verbesserte Vorrichtung und ein verbessertes Verfahren zum Vermeiden einer Kollision beim Antreiben von wenigstens zwei Movern auf einer Antriebsfläche bereitzustellen.

Die Aufgabe der Erfindung wird durch die unabhängigen Patentansprüche gelöst.

Es wird eine Vorrichtung zum Vermeiden einer Kollision beim Antreiben von wenigstens zwei Movern auf einer Antriebsfläche vorgeschlagen, wobei jeder Mover wenigstens einen zweiten Magnetfelderzeuger aufweist, wobei die Vorrichtung mehrere Sektoren aufweist, wobei die Sektoren Magnetfelderzeuger zum Erzeugen von Magnetfeldern aufweisen, wobei die Sektoren die Antriebsfläche bilden, wobei die Sektoren mit zumindest einer Steuereinheit verbunden sind, wobei die Steuereinheit ausgebildet ist, um eine Fahrwegplanung für wenigstens zwei Mover auszuführen, wobei wenigstens den zwei Movern eine Priorität zugeordnet ist, wobei die Steuereinheit ausgebildet ist, um die Prioritäten der Mover bei der Fahrwegplanung der Fahrwege der Mover in der Weise zu berücksichtigen, dass ein Fahrweg eines Movers mit einer höheren Priorität Vorrang vor einem Fahrweg eines Movers mit einer niedrigeren Priorität hat, sodass eine Kollision der Mover vermieden wird, wobei die Steuereinheit ausgebildet ist, um die Magnetfelderzeuger in der Weise mit Strom anzusteuern, dass die Mover entlang der ermittelten Fahrwege über die Antriebsfläche bewegbar sind. Dadurch kann auf einfache Weise eine Vorfahrt des Movers mit der höheren Priorität festgelegt werden.

In einer Ausführungsform weist ein erster Mover eine höhere Priorität als ein zweiter Mover auf, wobei die Steuereinheit ausgebildet ist, um bei der Fahrwegplanung eines ersten Fahrweges für den ersten Mover den zweiten Mover nicht zu berücksichtigen. Somit wird ein einfaches Verfahren zur Berücksichtigung der Prioritäten der Mover bereitgestellt. Somit kann Rechenzeit bei der Berechnung des ersten Fahrweges für den ersten Mover eingespart werden.

In einer Ausführungsform ist die Steuereinheit ausgebildet, um bei der Fahrwegplanung eines zweiten Fahrweges für den zweiten Mover den zweiten Fahrweg so zu planen, dass der zweite Fahrweg zu keiner Kollision mit dem ersten Fahrweg führt. Somit wird auf einfache Weise die höhere Priorität des ersten Movers berücksichtigt und eine Kollision vermieden. Beispielsweise kann der zweite Fahrweg in einem Abstand zum ersten Fahrweg geplant werden. Zudem kann eine Kreuzung zwischen dem ersten und dem zweiten Fahrweg vermieden werden. Zudem können bei sich kreuzenden Pfaden der zwei Fahrwege die Zeitpunkte, zu denen die Mover die Kreuzung der Pfade passieren so versetzt sein, dass keine Kollision der Mover stattfindet.

Somit wird der erste Mover als dynamisches Hindernis berücksichtigt, wenn der erste Mover eine höhere Priorität als der zweite Mover aufweist. Auf diese Weise wird der zweite Fahrweg des zweiten Movers so geplant, dass der zweite Mover dem ersten Mover ausweicht.

In einer Ausführungsform ist ein dritter Mover vorgesehen, wobei der dritte Mover eine niedrigere Priorität als der zweite Mover aufweist, wobei die Steuereinheit ausgebildet ist, um bei der Fahrwegplanung des ersten Fahrweges für den ersten Mover den dritten Mover nicht zu berücksichtigen, wobei die Steuereinheit ausgebildet ist, um bei der Fahrwegplanung des zweiten Fahrweges für den zweiten Mover den dritten Mover nicht zu berücksichtigen, wobei die Steuereinheit ausgebildet ist, um bei der Fahrwegplanung eines dritten Fahrweges für den dritten Mover den dritten Fahrweg so zu planen, dass der dritte Fahrweg zu keiner Kollision mit dem ersten und dem zweiten Fahrweg führt. Somit werden die Prioritäten auch für mehr als zwei Mover bei der Fahrwegplanung berücksichtigt. Es können natürlich auch mehr als drei Mover mit Prioritäten vorgesehen sein, deren Fahrwege entsprechend den Prioritäten berücksichtigt werden.

In einer Ausführungsform hängt die Priorität eines Movers von einem Betriebszustand oder einer Eigenschaft des Movers ab. Somit kann eine flexible und optimale Fahrwegplanung erreicht werden.

In einer Ausführungsform hängt die Priorität eines Movers von einer Geschwindigkeit des Movers ab, wobei die Priorität mit der Höhe der Geschwindigkeit zunimmt. Schnellere Mover sind schwerer zu bremsen. Zudem führt eine höhere Geschwindigkeit zu größeren radialen Kräften bei Kurvenfahrten. Zudem ist die Reaktionsstrecke bei schnelleren Movern länger. Somit ist es vorteilhaft, höhere Geschwindigkeiten mit einer höheren Priorität zu versehen.

In einer Ausführungsform ist die Priorität des Movers umso größer, je geringer ein Abstand des Movers zu einem Zielpunkt ist. Auf diese Weise wird erreicht, dass ein Mover nicht kurz vor dem Zielpunkt stehen bleibt. Ein Zielpunkt kann eine vorgegebene Station sein, an der eine Beladung aufgenommen oder abgegeben wird. Zudem kann der Zielpunkt auch eine Bearbeitungsstation sein, an der eine Bearbeitung der Beladung erfolgt.

In einer Ausführungsform ist die Priorität eines Movers umso größer, je größer ein minimaler möglicher Kurvenradius des Movers. Bei großen minimalen Kurvenradien ist die Möglichkeit, den Fahrweg stark zu ändern schlechter als bei einem kleinen minimalen Kurvenradius. Somit ist es vorteilhaft, für die trägeren Mover eine größere Priorität zu vergeben.

In einer Ausführungsform hängt die Priorität eines Movers von einem Gewicht des Movers, insbesondere von einem Ladegut des Movers abhängt, wobei insbesondere die Priorität umso größer ist, je größer das Gewicht des Movers mit Ladegut ist. Die Masse des Movers mit Ladegut beeinflusst die Möglichkeit, den Fahrweg zu ändern. Je höher die Masse des Movers, umso langsamer kann ein Fahrweg geändert werden. Zudem ist der Stromverbrauch bei einer Änderung eines Fahrweges für einen Mover mit größerer Masse größer als für einen Mover mit einer kleineren Masse. Zudem kann die Priorität des Movers von der Art des Ladegutes abhängen. Beispielsweise weist ein flüssiges Ladegut eine höhere Priorität auf als ein Ladegut aus einem Feststoff. Zudem kann ein giftiges Ladegut eine höhere Priorität als ein ungiftiges Ladegut aufweisen.

In einer Ausführungsform ist die Priorität eines Movers umso größer, je kleiner eine maximale Beschleunigung des Movers ist. Je kleiner die maximale Beschleunigung, umso langsamer ist die Reaktionszeit, einen Fahrweg zu ändern.

In einer Ausführungsform hängt die Priorität eines Movers von einem Betriebszustand oder einer Eigenschaft eines Sektors ab, auf dem sich der Mover befindet. Dadurch können Gegebenheiten der Sektoren berücksichtigt werden, um eine optimale Auswahl für die Priorität zu treffen.

In einer Ausführungsform hängt die Priorität des Movers von einer Temperatur des Sektors ab, auf dem sich der Mover befindet, wobei die Priorität mit der Höhe der Temperatur zunimmt. Es kann vorteilhaft sein, um eine Überhitzung der Sektoren zu vermeiden. Somit ist es vorteilhaft, die Stromzufuhr zu den Sektoren, die für eine Änderung des Fahrweges des Movers erforderlich wäre, bei Sektoren mit hohen Temperaturen zu vermeiden.

In einer Ausführungsform hängt die Priorität des Movers von einem Stromverbrauch des Sektors ab. Es kann vorteilhaft sein, den Stromverbrauch eines Sektors auf einen vorgebbaren Wert zu begrenzen, um z.B. eine Überhitzung der Sektoren zu vermeiden.

In einer Ausführungsform ist jedem Mover eine individuelle Kennung zugeordnet, wobei die Priorität anhand der Kennung des Mover festgelegt ist. Somit ist auf einfache Weise eindeutig eine Rangfolge der Prioritäten der Mover festgelegt.

Es wird ein Verfahren zum Vermeiden einer Kollision beim Ermitteln von Fahrwegen für wenigstens zwei Mover auf einer Antriebsfläche vorgeschlagen, wobei jeder Mover wenigstens einen zweiten Magnetfelderzeuger aufweist, wobei die Vorrichtung mehrere Sektoren aufweist, wobei die Sektoren Magnetfelderzeuger zum Erzeugen von Magnetfeldern aufweisen, wobei die Sektoren die Antriebsfläche bilden, wobei eine Fahrwegplanung für wenigstens zwei Mover ausgeführt wird, wobei wenigstens den zwei Movern eine Priorität zugeordnet ist, wobei die Prioritäten der Mover bei der Fahrwegplanung der Fahrwege der Mover in der Weise berücksichtigt wird, dass ein Fahrweg eines Movers mit einer höheren Priorität Vorrang vor einem Fahrweg eines Movers mit einer niedrigeren Priorität hat, sodass eine Kollision der Mover vermieden wird.

In einer Ausführungsform werden die Magnetfelderzeuger der Sektoren in der Weise mit Strom angesteuert, dass die Mover entlang der ermittelten Fahrwege über die Antriebsfläche bewegt werden.

In einer Ausführungsform weist ein erster Mover eine höhere Priorität als ein zweiter Mover auf, wobei bei der Fahrwegplanung eines ersten Fahrweges für den ersten Mover der zweite Mover nicht berücksichtigt wird.

In einer Ausführungsform wird bei der Fahrwegplanung eines zweiten Fahrweges für den zweiten Mover der zweite Fahrweg so geplant, dass der zweite Fahrweg zu keiner Kollision mit dem ersten Fahrweg führt.

In einer Ausführungsform ist ein dritter Mover vorgesehen, wobei der dritte Mover eine niedrigere Priorität als der zweite Mover aufweist, wobei bei der Fahrwegplanung des ersten Fahrweges für den ersten Mover der dritte Mover nicht berücksichtigt wird, wobei bei der Fahrwegplanung des zweiten Fahrweges für den zweiten Mover der dritte Mover nicht berücksichtigt wird, wobei bei der Fahrwegplanung eines dritten Fahrweges für den dritten Mover der dritte Fahrweg so geplant wird, dass der dritte Fahrweg zu keiner Kollision mit dem ersten und dem zweiten Fahrweg führt.

In einer Ausführungsform hängt die Priorität des Movers von einem Betriebszustand oder einer Eigenschaft des Movers ab.

In einer Ausführungsform hängt die Priorität eines Movers von einer Geschwindigkeit des Movers ab, wobei die Priorität mit der Höhe der Geschwindigkeit zunimmt, und/oder wobei die Priorität des Movers mit Abnahme eines Abstandes zu einem Zielpunkt des Movers zunimmt, und/oder wobei die Priorität eines Movers umso größer ist, je größer ein minimaler möglicher Kurvenradius des Movers ist, und/oder wobei die Priorität eines Movers von einem Gewicht des Movers, insbesondere von einem Ladegut des Movers abhängt, wobei die Priorität umso größer ist, je größer das Gewicht des Movers mit dem Ladegut ist und/oder wobei die Priorität des Movers umso größer ist, je kleiner eine maximale mögliche Beschleunigung des Movers ist.

In einer Ausführungsform hängt die Priorität eines Movers von einem Betriebszustand oder einer Eigenschaft eines Sektors ab, auf dem sich der Mover befindet.

In einer Ausführungsform hängt die Priorität des Movers von einer Temperatur des Sektors ab, auf dem sich der Mover befindet, wobei die Priorität mit der Höhe der Temperatur zunimmt, und/oder wobei die Priorität des Movers von einem Stromverbrauch des Sektors abhängt.

Es wird eine Steuereinheit vorgeschlagen, die ausgebildet ist, eines der beschriebenen Verfahren auszuführen.

Es wird ein Computerprogramm mit Befehlen vorgeschlagen, die beim Ablaufen auf einem Computer eines der beschriebenen Verfahren ausführen.

Die Erfindung wird nachfolgend anhand von Ausführungsbeispielen und unter Bezugnahmen auf Figuren näher erläutert. Dabei zeigen jeweils in schematischer Darstellung
- **Fig. 1**: eine Vorrichtung zum Antreiben eines Movers auf einer Antriebsfläche;
- **Fig. 2**: eine Ansicht eines weiteren Antriebssystems mit sechs nebeneinander angeordneten Statormodulen;
- **Fig. 3**: den Mover des planaren Antriebssystems mit einer Magnetanordnung;
- **Fig. 4**: eine perspektivische Ansicht eines Teils des Antriebssystems;
- **Fig. 5**: eine Explosionsansicht eines Sektors des Antriebssystems mit einer ersten, zweiten, dritten und vierten Statorlage;
- **Fig. 6**: die Statorlagen des ersten Sektors der Vorrichtung mit einzelnen Statorsegmenten; und
- **Fig. 7**: einen Teilausschnitt einer Antriebsfläche, auf der sich Mover bewegen, und eine Steuereinheit.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten planaren Antriebssysteme.

Außerdem betrifft die Erfindung Weiterentwicklungen der in den deutschen Patentanmeldungen 10 2017 131 304.4, 10 2017 131 314.1, und 102017 131 321.4, beim DPMA eingereicht am 27.12.2017, offenbarten planaren Antriebssysteme.

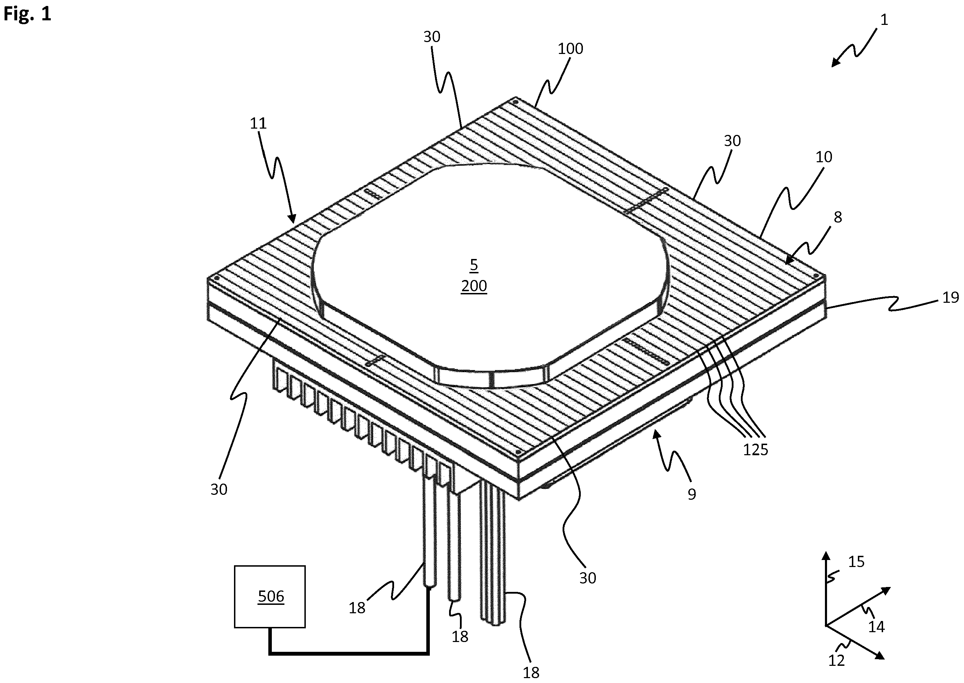

**Fig. 1** zeigt eine Vorrichtung zum Antreiben wenigstens eines Movers 200 auf einer Antriebsfläche in Form eines Planarantriebssystems 1 mit einem Statormodul 10 und einem Läufer, der durch den Mover 200 gebildet wird.

Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d. h. planare, Statorfläche 11 auf. Die Statorfläche 11 bildet zugleich eine Oberfläche des Statormoduls 10.

Die Statorfläche 11 ist senkrecht zu einer vertikalen Richtung 15 orientiert und erstreckt sich über die gesamte Oberseite 8 der Statoreinheit 100 und des Statormoduls 10 entlang der Richtungen 12 und 14. Die Statoreinheit 100 umfasst an der Statorfläche 11 mindestens einen mit einem Antriebsstrom beaufschlagbaren Leiterstreifen 125. Die Statoreinheit 100 kann, wie dargestellt, an der Statorfläche 11 eine Mehrzahl der Leiterstreifen 125 aufweisen. Die Leiterstreifen 125 können von einer Steuereinheit 506 jeweils mit einem Antriebsstrom beaufschlagt werden. Mittels der Antriebsströme in den Leiterstreifen 125 kann ein Magnetfeld erzeugt werden, welches den Mover 200 in Wechselwirkung mit in Fig. 1 nicht dargestellten Antriebsmagneten des Movers 200 antreibt. Der Mover 200 und die Statoreinheit 100 mit den stromdurchflossenen Leiterstreifen 125 bilden einen elektromagnetischen Planarmotor. Die Leiterstreifen 125 bilden Spulenleiter der Statoreinheit 100 und können auch als Spulenleiter oder Magnetfelderzeuger bezeichnet werden.

Der Mover 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste Richtung 12 und die zweite Richtung 14 sind linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der vertikalen Richtung 15 orientiert. Indem der Mover 200 zugleich in der ersten Richtung 12, als auch in der zweiten Richtung 14 angetrieben wird, kann der Mover 200 über der Statorfläche 11 in einer beliebigen Richtung angetrieben werden. Der Mover 200 kann im Betrieb schwebend über der Statorfläche 11 gehalten werden, beispielsweise durch eine magnetische Wechselwirkung zwischen den Antriebsmagneten und geeigneten Antriebsströmen in den Leiterstreifen 125. Neben einem Antreiben des Movers 200 in der ersten und/oder zweiten Richtung 12, 14 ist auch ein Antreiben in der dritten, vertikalen Richtung 15 möglich. Zudem kann der Mover 200 auch um seine Achse gedreht werden. Die Leiterstreifen stellen Leiterbahnen dar.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der vertikalen Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte.

An der Unterseite 9 des Statormoduls 10 oder an der Unterseite des Modulgehäuses 19 können weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Zudem kann eine Steuereinheit 506 mit einer Anschlussleitung 18 verbunden sein. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems verbunden sein, wobei die Steuereinheit des Planarantriebssystems von der Steuereinheit 506 gebildet sein kann. Mittels des Datennetzwerks können beispielsweise Steuerdaten zum Steuern des Movers 200 bzw. zum Steuern der zielgerichteten Beaufschlagen der Leiterstreifen 125 mit geeigneten Antriebsströmen mit der Steuereinheit 506 ausgetauscht werden.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 12 eine Ausdehnung zwischen 100mm und 500mm, insbesondere zwischen 120mm und 350mm, insbesondere von 240mm aufweisen. Das Statormodul 10 kann in der vertikalen Richtung 15 eine Ausdehnung zwischen 10mm und 100mm, insbesondere zwischen 15mm und 60mm, insbesondere von 30mm aufweisen. Das Modulgehäuse 19 kann in der vertikalen Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11.

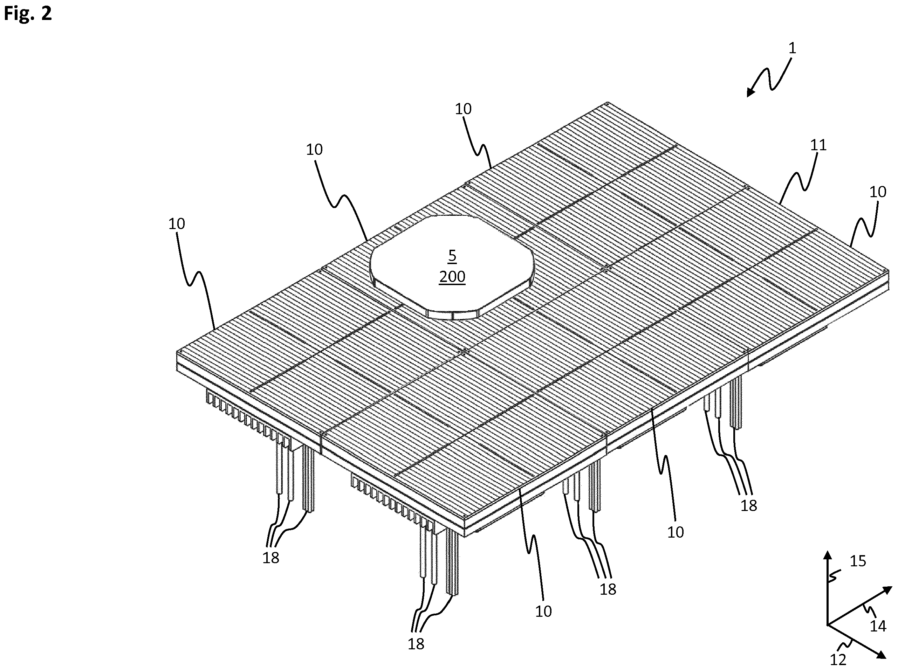

Mehrere Exemplare des Statormoduls 10 können derart nebeneinander angeordnet werden, dass die Außenkanten 30 benachbarter Statormodule 10 aneinander liegen und die Statorflächen 11 der Statormodule 10 eine zusammenhängende Antriebsfläche bilden, über die der Mover 200 unterbrechungsfrei bewegt werden kann, wie in Fig. 2 dargestellt ist. Da die Seitenflächen des Statormoduls 10 an den Außenkanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinander liegenden Seitenflächen der Statoreinheiten 100 oder aneinander liegenden Außenkanten 30 der Statorflächen 11 angeordnet werden.

Benachbarte Statormodule 10 sind jeweils derart aneinander anschließend angeordnet, dass die Außenkanten 30 der Statorflächen 11 benachbarter Statormodule 10 aneinander liegen. Dadurch bilden die Statorflächen 11 der Statormodule 10 eine zusammenhängende, planare Antriebsfläche für den Mover 200. Der Mover 200 kann nahtlos von der Statorfläche 11 eines der Statormodule 10 auf die oder über die Statorfläche 11 des benachbarten Statormoduls 10 bewegt werden. Jedem der Statormodule 10 können über jeweils eigene Anschlussleitungen 18 Steuersignale und/oder Energie zugeführt werden. Alternative, hier nicht dargestellte, Ausführungsformen der Statormodule 10 können auch elektrische Verbindungselemente aufweisen, mittels derer Steuersignale und/oder elektrische Energie von einem Statormodul 10 zum benachbarten Statormodul 10 übertragen werden kann. Derartige Verbindungselemente können beispielsweise an den Seitenflächen der Statormodule 10 angeordnet sein. Die Verbindungselemente können als Steckverbinder oder als aneinander anordbare Kontaktflächen ausgebildet sein.

Bei alternativen, hier ebenfalls nicht dargestellten Ausführungsformen können die Statormodule 10 auch sternförmig über jeweils eigene Anschlussleitungen an eine zentrale Energieversorgungseinrichtung und/oder eine zentrale Steuereinheit angeschlossen sein.

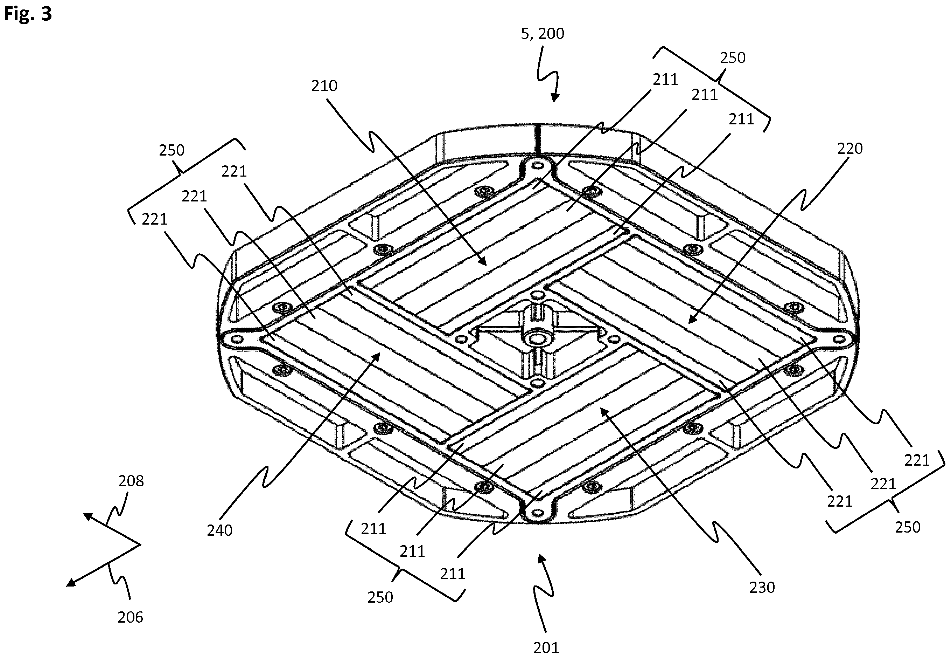

**Fig. 3** zeigt den Läufer, d. h. den Mover 200, in einer Ansicht von unten auf eine Unterseite des Movers 200. Der Mover 200 weist an der Unterseite eine Magnetanordnung 201 auf. Die Magnetanordnung 201 ist rechteckig, insbesondere quadratisch, ausgebildet und umfasst mehrere Magneten. Die Unterseite des Movers 200 ist, insbesondere im Bereich der Magneten der Magnetanordnung 201, eben bzw. planar ausgebildet. Im Betrieb ist die Unterseite des Movers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete Antriebsmagnete 211 auf. Insbesondere können die erste und die dritte Magneteinheit 210, 230 jeweils drei Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte weitere Antriebsmagnete 221 auf. Die erste und dritte Magneteinheit 210, 230 dient im Betrieb einem Antreiben des Movers 200 in der zweiten Läuferrichtung 208 und die zweite und vierte Magneteinheit 220, 240 dient im Betrieb einem Antreiben des Movers 200 in der ersten Läuferrichtung 206. Die Antriebsmagneten 211 der ersten und dritten Magneteinheit 210, 230 und die weiteren Antriebsmagneten 221 der zweiten und vierten Magneteinheit 220, 240 sind jeweils senkrecht zu der ersten und der zweiten Läuferrichtung 206, 208 magnetisiert.

Die Antriebsmagneten 211 und/oder weiteren Antriebsmagneten 221 stellen zweite Magnetfelderzeuger 250 dar. Die zweiten Magnetfelderzeuger 250 können auch andere Materialien, Funktionsprinzipien und/oder Formen aufweisen.

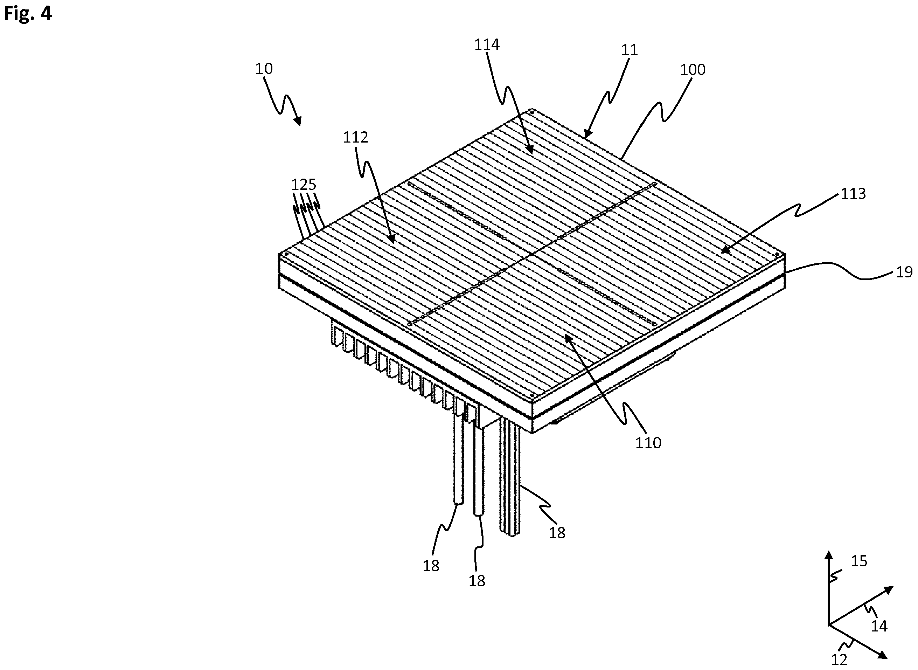

**Fig. 4** zeigt das Statormodul 10 des Planarantriebssystems 1 in einer perspektivischen Ansicht ohne den Mover 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten Leiterstreifen 125. Jeder der Leiterstreifen 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 sind die Leiterstreifen 125 in mehreren übereinanderliegenden Statorlagen oder Statorebenen angeordnet, wobei jede der Statorlagen lediglich Leiterstreifen 125 umfasst, die entweder im Wesentlichen entlang der ersten Richtung 12 oder im Wesentlichen entlang der zweiten Richtung 14 länglich ausgedehnt sind. Von der Ausdehnung der Leiterstreifen 125 abgesehen und soweit im Folgenden keine Unterschiede beschrieben werden, sind die Statorsektoren 110, 112, 113, 114 auf den unterschiedlichen Statorlagen identisch ausgebildet. Bei der in Fig. 4 dargestellten Statoreinheit 100 des Statormoduls 10 umfasst die Statorlage an der Statorfläche 11 lediglich Leiterstreifen 125, welche entlang der ersten Richtung 12 länglich ausgedehnt und entlang der zweiten Richtung 14 nebeneinander und aneinander anschließend angeordnet sind.

Die in Fig. 4 sichtbare Statorlage an der Statorfläche 11 bildet eine erste Statorlage der Statoreinheit 100. In der vertikalen Richtung 15 unterhalb der ersten Statorlage umfasst die Statoreinheit 100 mindestens noch eine zweite Statorlage.

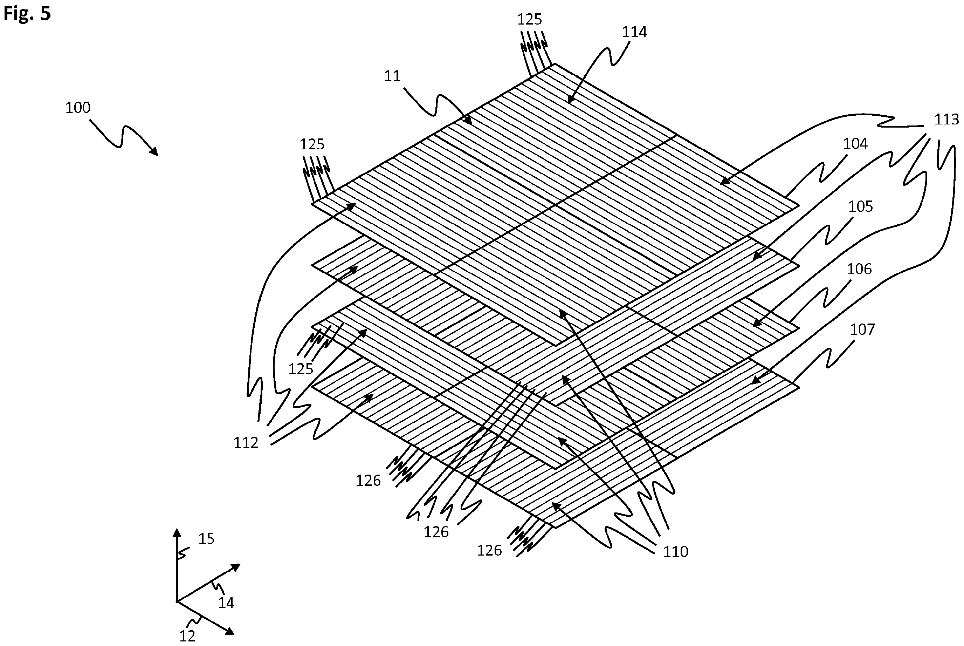

**Fig. 5** zeigt eine schematische perspektivische Darstellung einer Explosionsansicht der Statoreinheit 100 mit den einzelnen Statorlagen.

Die Statoreinheit 100 umfasst in der vertikalen Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet wie die in Fig. 4 dargestellte erste Statorlage 104 an der Statorfläche 11 der Statoreinheit 100.

Die ersten bis vierten Statorsektoren 110, 112, 113, 114 umfassen in der dritten Statorlage 106, wie in der ersten Statorlage 104, entlang der ersten Richtung 12 länglich ausgedehnte und in der zweiten Richtung 14 nebeneinander und aneinander anschließend angeordnete Leiterstreifen 125. In der zweiten Statorlage 105 und in der vierten Statorlage 107 umfassen die ersten bis vierten Statorsektoren 110, 112, 113, 114 weitere Leiterstreifen 126. Soweit im Folgenden keine Unterschiede beschrieben werden, sind die weiteren Leiterstreifen 126 ausgebildet wie die Leiterstreifen 125 in der ersten Statorlage 104 und in der dritten Statorlage 106. Anders als die Leitersteifen 125 der ersten und dritten Statorlage 104, 106, sind die weiteren Leiterstreifen 126 der zweiten und vierten Statorlage 105, 107 entlang der zweiten Richtung 14 länglich ausgedehnt und in der ersten Richtung 12 nebeneinander und aneinander anschließend angeordnet.

Die ersten bis vierten Statorsektoren 110, 112, 113, 114 umfassen in der ersten und dritten Statorlage 104, 106 ausschließlich die entlang der ersten Richtung 12 länglich ausgedehnten Leiterstreifen 125 und nicht auch noch zusätzlich die entlang der zweiten Richtung 14 länglich ausgedehnten weiteren Leiterstreifen 126. Ebenso umfassen die ersten bis vierten Statorsektoren 110, 112, 113, 114 in der zweiten und vierten Statorlage 105, 107 ausschließlich die entlang der zweiten Richtung 14 länglich ausgedehnten weiteren Leiterstreifen 126 und nicht auch noch zusätzlich die entlang der ersten Richtung 12 länglich ausgedehnten Leiterstreifen 125.

Die ersten bis vierten Statorsektoren 110, 112, 113, 114 weisen in allen ersten bis vierten Statorlagen 104, 105, 106, 107 jeweils die gleichen Abmessungen auf. Insbesondere weisen die ersten bis vierten Statorsektoren 110, 112, 113, 114 in allen ersten bis vierten Statorlagen 104, 105, 106, 107 in der ersten Richtung 12 und in der zweiten Richtung 14 jeweils gleiche Abmessungen auf.

Die Leiterstreifen 125 und weiteren Leiterstreifen 126 übereinander angeordneter erster bis vierter Statorlagen 104, 105, 106, 107 sind jeweils elektrisch isoliert voneinander ausgebildet. Beispielsweise können die ersten bis vierten Statorlagen 104, 105, 106, 107 jeweils als voneinander isolierte Leiterbahnlagen einer mehrlagigen Leiterplatte ausgebildet sein.

Die ersten bis vierten Statorsektoren 110, 112, 113, 114 sind unabhängig voneinander bestrombar ausgebildet. Insbesondere sind die Leiterstreifen 125 und die weiteren Leiterstreifen 126 der ersten bis vierten Statorsektoren 110, 112, 113, 114 auf der Statoreinheit 100 elektrisch isoliert voneinander ausgebildet.

Während die Leiterstreifen 125 und weiteren Leiterstreifen 126 der einzelnen ersten bis vierten Statorsektoren 110, 112, 113, 114 auf der Statoreinheit 100 jeweils elektrisch isoliert von den Leiterstreifen 125 und weiteren Leiterstreifen 126 der übrigen ersten bis vierten Statorsektoren 110, 112, 113, 114 ausgebildet sind, können die Leiterstreifen 125 und weiteren Leiterstreifen 126 innerhalb der einzelnen ersten bis vierten Statorsektoren 110, 112, 113, 114 jeweils elektrisch leitend miteinander verbunden sein. Insbesondere können innerhalb der ersten bis vierten Statorsektoren 110, 112, 113, 114 jeweils übereinanderliegende Leiterstreifen 125 der ersten Statorlage 104 und der dritten Statorlage 106 elektrisch leitend miteinander verbunden sein. Beispielsweise können jeweils übereinanderliegende Leiterstreifen 125 der ersten bis vierten Statorsektoren 110, 112, 113, 114 in Reihe geschaltet sein. Ebenso können innerhalb der ersten bis vierten Statorsektoren 110, 112, 113, 114 jeweils übereinanderliegende weitere Leiterstreifen 126 der zweiten Statorlage 105 und der vierten Statorlage 107 elektrisch leitend miteinander verbunden sein. Beispielsweise können jeweils übereinanderliegende weitere Leiterstreifen 126 der ersten bis vierten Statorsektoren 110, 112, 113, 114 in Reihe geschaltet sein.

Alternative, hier nicht dargestellte Ausführungsformen der Statoreinheit 100 können zwischen der zweiten und dritten Statorlage 105, 106 in der vertikalen Richtung 15 untereinander angeordnete weitere Statorlagen umfassen. Dabei kann die Statoreinheit 100 in der vertikalen Richtung 15 jeweils abwechselnd Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen. Bei einer dazu alternativen, ebenfalls nicht dargestellten Ausführungsform kann die Statoreinheit 100 in der vertikalen Richtung 15 jeweils Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen, wobei die Summe der Statorlagen mit im Wesentlichen entlang der ersten Richtung 12 länglich ausgedehnten Leiterstreifen 125 und die Summe der Statorlagen mit im Wesentlichen entlang der zweiten Richtung 14 länglich ausgedehnten weiteren Leiterstreifen 126 einen gleichen mittleren Abstand zu der Statorfläche 11 aufweisen. Außerdem können bei alternativen, nicht dargestellten Ausführungsformen der Statoreinheit 100 zwischen der ersten und der zweiten Statorlage 104, 105 und/oder zwischen der dritten und der vierten Statorlage 106, 107 weitere Statorlagen mit entlang der ersten Richtung 12 ausgedehnten Leiterstreifen 125 oder mit entlang der zweiten Richtung 14 ausgedehnten weiteren Leiterstreifen 126 angeordnet sein.

Die Leiterstreifen 125, 126 der ersten bis vierten Statorsektoren 110, 112, 113, 114 sind innerhalb der ersten bis vierten Statorlagen 104, 105, 106, 107 jeweils zu Statorsegmenten zusammengefasst.

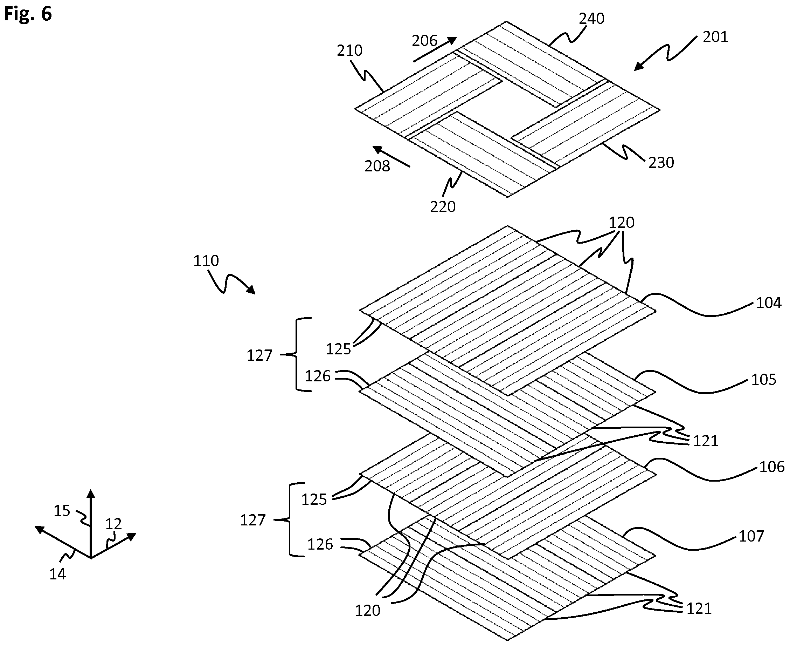

**Fig. 6** zeigt eine schematische Darstellung der ersten bis vierten Statorlagen 104, 105, 106, 107 des ersten Statorsektors 110 mit den einzelnen Statorsegmenten.

Die Leiterstreifen 125 und weiteren Leiterstreifen 126 des ersten Statorsektors 110 sind innerhalb der ersten bis vierten Statorlagen 104, 105, 106, 107 jeweils zu Statorsegmenten 120, 121 zusammengefasst. Der erste Statorsektor 110 umfasst in jeder ersten bis vierten Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Leiterstreifen 125 oder weitere Leiterstreifen 126. Der erste Statorsektor 110 umfasst in der ersten und dritten Statorlage 104, 106 jeweils drei erste Statorsegmente 120 und in der zweiten und vierten Statorlage 105, 107 jeweils drei zweite Statorsegmente 121. Die ersten Statorsegmente 120 umfassen jeweils sechs nebeneinanderliegende der entlang der zweiten Richtung 14 nebeneinander angeordneten und entlang der ersten Richtung 12 länglich ausgedehnten Leiterstreifen 125. Die zweiten Statorsegmente 121 umfassen jeweils sechs nebeneinanderliegende der entlang der ersten Richtung 12 nebeneinander angeordneten und entlang der zweiten Richtung 14 länglich ausgedehnten weiteren Leiterstreifen 126.

Der erste Statorsektor 110 der Statoreinheit 100 umfasst damit in der ersten Statorlage 104 und in der dritten Statorlage 106 ausschließlich Leiterstreifen 125, die entlang der ersten Richtung 12 länglich ausgedehnt sind, und in der zweiten Statorlage 105 und in der vierten Statorlage 107 ausschließlich weitere Leiterstreifen 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und dritten Statorlage 104, 106 des ersten Statorsektors 110 in der ersten Richtung 12 über die drei in der ersten Richtung 12 nebeneinander angeordneten zweiten Statorsegmente 121 der zweiten und vierten Statorlage 105, 107 des ersten Statorsektors 110 erstreckt. Außerdem erstrecken sich die zweiten Statorsegmente 121 der zweiten und vierten Statorlage 105, 107 des ersten Statorsektors 110 in der zweiten Richtung 14 über alle in der zweiten Richtung 14 nebeneinander angeordneten ersten Statorsegmente 120 der ersten und dritten Statorlage 104, 106 des ersten Statorsektors 110.

Die Anordnung der Leiterstreifen 125 und weiteren Leiterstreifen 126 in den ersten bis vierten Statorlagen 104, 105, 106, 107 des zweiten Statorsektors 112, des dritten Statorsektors 113 und des vierten Statorsektors 114 entspricht der in Fig. 6 dargestellten Anordnung der Leiterstreifen 125 und weiteren Leiterstreifen 126 in den ersten bis vierten Statorlagen 104, 105, 106, 107 des ersten Statorsektors 110.

Im Betrieb des Planarantriebssystems 1 kann der Mover 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die Leiterstreifen 125 der ersten Statorsegmente 120 erzeugten Magnetfeld wechselwirken, um den Mover 200 entlang der zweiten Richtung 14 anzutreiben. Die zweite Magneteinheit 220 und die vierte Magneteinheit 240 können im Betrieb mit dem durch die weiteren Leiterstreifen 126 der zweiten Statorsegmente 121 erzeugten Magnetfeld wechselwirken, um den Mover 200 entlang der ersten Richtung 12 anzutreiben.

Alternativ kann der Mover 200, anders als in Fig. 6 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Movers 200 in die erste Richtung 12 und die zweite und die vierte Magneteinheit 220, 240 mit dem Magnetfeld der ersten Statorsegmente 120 zum Antreiben des Movers 200 in die zweite Richtung 14 zusammen.

Die Leiterstreifen 125 oder weiteren Leiterstreifen 126 der einzelnen ersten oder zweiten Statorsegmente 120, 121 sind jeweils unabhängig von den Leiterstreifen 125 oder weiteren Leiterstreifen 126 der übrigen ersten oder zweiten Statorsegmente 120, 121 mit den Antriebsströmen bestrombar. Insbesondere hängen die Antriebsströme in einem der ersten oder zweiten Statorsegmente 120, 121 nicht zwingend von Antriebsströmen in einem der anderen ersten oder zweiten Statorsegmente 120, 121 ab. Außerdem können die Leiterstreifen 125 oder weiteren Leiterstreifen 126 eines der ersten oder zweiten Statorsegmente 120, 121 mit Antriebsströmen beaufschlagt werden, während die Leiterstreifen 125 oder weiteren Leiterstreifen 126 eines anderen, beispielsweise eines benachbarten, ersten oder zweiten Statorsegments 120, 121 stromlos sind. Die Leiterstreifen 125 oder weiteren Leiterstreifen 126 der einzelnen ersten oder zweiten Statorsegmente 120, 121 sind auf der Statoreinheit 100 elektrisch isoliert von den Leiterstreifen 125 oder weiteren Leiterstreifen 126 der übrigen ersten oder zweiten Statorsegmente 120, 121 ausgeführt. Die Leiterstreifen 125 oder weiteren Leiterstreifen 126 unterschiedlicher erster oder zweiter Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Leiterstreifen 125 oder weiteren Leiterstreifen 126 in den einzelnen ersten bis vierten Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Leiterstreifen 125 oder weiteren Leiterstreifen 126 zu Dreiphasensystemen mit einem gemeinsamen Sternpunkt zusammengeschaltet sein. Die Dreiphasensysteme können jeweils sechs benachbarte Leiterstreifen 125 oder sechs benachbarte weitere Leiterstreifen 126 umfassen. Die Anzahl benachbarter Leiterstreifen 125 oder weiteren Leiterstreifen 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Leiterstreifen 125 oder weiteren Leiterstreifen 126 zu Mehrphasensystemen werden zur Bestromung der Leiterstreifen 125 oder weiteren Leiterstreifen 126 weniger Kontakte benötigt als bei einer separaten Bestromung der einzelnen Leiterstreifen 125 oder weiteren Leiterstreifen 126. Dadurch wird der für die Bestromung der Leiterstreifen 125 oder weiteren Leiterstreifen 126 benötigte Hardwareaufwand, insbesondere die Anzahl der für die Bestromung benötigten Stromerzeugungseinheiten, reduziert.

Die ersten bis vierten Statorsektoren 110, 112, 113, 114 können, wie in den Fig. 4 und 5 dargestellt, in jeder ersten bis vierten Statorlage 104, 105, 106, 107 jeweils achtzehn Leiterstreifen 125 oder weitere Leiterstreifen 126 umfassen. Jeweils sechs benachbarte Leiterstreifen 125 oder weitere Leiterstreifen 126 können zu einem Dreiphasensystem verschaltet sein und die ersten bis vierten Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Leiterstreifen 125 oder weitere Leiterstreifen 126, die im Wesentlichen in der gleichen Richtung 12, 14 ausgedehnt sind und in den ersten bis vierten Statorlagen 104, 105, 106, 107 übereinanderliegen, in Serie zu einem gemeinsamen Dreiphasensystem verschaltet sein. Die Leiterstreifen 125 oder weiteren Leiterstreifen 126 können dabei derart verschaltet sein, dass in der vertikalen Richtung 15 übereinanderliegende Leiterstreifen 125 oder weitere Leiterstreifen 126 jeweils mit dem gleichen Antriebsstrom beaufschlagt werden. Die Dreiphasensysteme weisen damit drei Phasen auf, die aus in den ersten bis vierten Statorlagen 104, 105, 106, 107 übereinanderliegenden Leiterstreifen 125 oder weiteren Leiterstreifen 126 zusammengeschaltet sind.

Beispielsweise können in den einzelnen ersten bis vierten Statorlagen 104, 105, 106, 107 jeweils alle übereinanderliegenden und parallel ausgerichteten Leiterstreifen 125 oder weiteren Leiterstreifen 126 in Serie geschaltet sein. Insbesondere können die Leiterstreifen 125 von in der ersten Statorlage 104 und in der dritten Statorlage 106 übereinanderliegenden Dreiphasensystemen, sowie die weiteren Leiterstreifen 126 von in der zweiten Statorlage 105 und in der vierten Statorlage 107 übereinanderliegenden Dreiphasensystemen jeweils seriell zu einem gemeinsamen Dreiphasensystem verschaltet sein. Dabei können jeweils alle in der vertikalen Richtung 15 übereinanderliegenden und parallel orientierten Leiterstreifen 125 oder weiteren Leiterstreifen 126 der ersten und dritten Statorlage 104, 106 und der zweiten und vierten Statorlage 105, 107 in Serie geschaltet sein.

Insbesondere sind bei der Statoreinheit 100 innerhalb der einzelnen Statorsegmente 120 die entlang der ersten Richtung 12 länglich ausgedehnten Leiterstreifen 125 jeweils zu Mehrphasensystemen mit einem gemeinsamen Sternpunkt verschaltet. Dabei sind die einzelnen Mehrphasensysteme verschiedener Statorsegmente 120 jeweils unabhängig voneinander bestrombar. Ebenso sind alle weiteren Leiterstreifen 126 der einzelnen weiteren Statorsegmente 121 jeweils zu weiteren Mehrphasensystemen verschaltet. Die einzelnen weiteren Mehrphasensysteme der weiteren Statorsegmente 121 sind jeweils unabhängig voneinander und unabhängig von den Mehrphasensystemen der Statorsegmente 120 bestrombar. Insbesondere sind die Leiterstreifen 125 der Statorsegmente 120 und die weiteren Leiterstreifen 126 der weiteren Statorsegmente 121 jeweils zu Dreiphasensystemen verschaltet. Die Leiterstreifen 125 und die weiteren Leiterstreifen 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Leiterstreifen 125 sind räumlich in der zweiten Richtung 14 um jeweils ein Drittel der wirksamen Wellenlänge der mit den Leiterstreifen 125 wechselwirkenden Antriebsmagnete 211 der ersten und dritten Magneteinheit 210, 230 versetzt angeordnet. Die weiteren Leiterstreifen 126 sind räumlich in der ersten Richtung 12 um jeweils ein Drittel der wirksamen weiteren Wellenlänge der mit den weiteren Leiterstreifen 126 wechselwirkenden weiteren Antriebsmagnete 221 der zweiten und vierten Magneteinheit 220, 240 versetzt angeordnet.

Die Leiterstreifen 125 und die weiteren Leiterstreifen 126 stellen elektrische Magnetfelderzeuger 127 dar. Die Magnetfelderzeuger 127 können auch andere Materialien, Funktionsprinzipien und/oder Formen aufweisen.

Der Mover stellt das bewegbare Element, somit den Läufer der Vorrichtung dar und weist Mittel zur Erzeugung eines Magnetfeldes, insbesondere Magneten oder Permanentmagneten auf, die als zweite Magnetfelderzeuger bezeichnet werden. Das Magnetfeld des Movers sorgt mit dem durch die Magnetfelderzeuger 127 erzeugten, veränderbaren Magnetfeld der Statoreinheit dafür, dass der Mover über die Statoreinheit bewegt wird, so dass insbesondere ein Luftspalt zwischen der Statoreinheit und dem Mover ausgebildet wird.

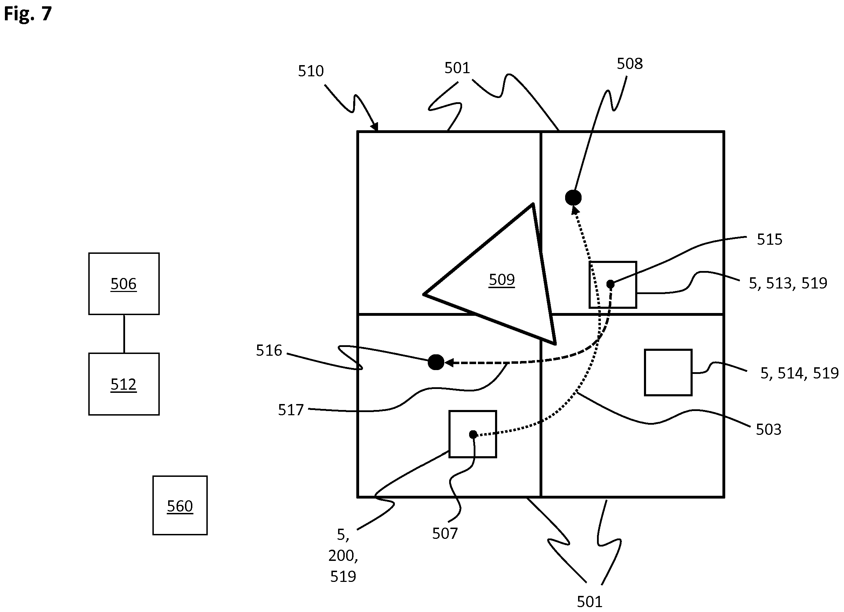

**Fig. 7** zeigt in einer schematischen Darstellung einen Ausschnitt einer Antriebsfläche 510 in einer Draufsicht. Die Antriebsfläche 510 kann durch ein in den Figuren 1 bis 6 beschriebenes Planarantriebssystem 1 ausgebildet sein. Es können jedoch auch andere Ausführungsformen von Planarantriebssystemen 1 verwendet werden, die mithilfe von Magnetfeldern einen Mover 5, 200, 513, 514 auf einer Antriebsfläche 510 bewegen. Es sind Teilausschnitte von vier Sektoren 501 dargestellt. Ein Sektor 501 kann durch ein in den Figuren 1 bis 6 beschriebenes Statormodul 10 gebildet sein. Die Sektoren 501 weisen in dem Ausführungsbeispiel die Form von Quadraten auf. Abhängig von der gewählten Ausführungsform können die Sektoren 501 auch andere Formen wie z. B. Rechtecke oder Dreiecke aufweisen. Ein Sektor 501 kann z. B. eine Größe im Bereich von 150mm x 150mm bis zu 240mm x 240mm aufweisen. Abhängig von der gewählten Ausführungsform kann ein Sektor 501 auch andere Größen aufweisen. Zudem können die Sektoren 501 auch unterschiedliche Größen aufweisen.

Zudem sind ein erster Mover 200, ein zweiter Mover 513 und ein dritter Mover 514 auf der Antriebsfläche 510 angeordnet. Sofern im Folgenden nicht zwischen den einzelnen ersten, zweiten oder dritten Movern 200, 513, 514 unterschieden wird, gelten die gemachten Aussagen für den ersten Mover 200, den zweiten Mover 513 und/oder den dritten Mover 514 in analoger Weise. Dementsprechend wird dann an den entsprechenden Stellen im Folgenden nur von Movern mit dem gemeinsamen Bezugszeichen 5 gesprochen. Der erste Mover 200 ist beispielsweise in Form eines Läufers ausgebildet, wie in den Figuren 1 bis 3 beschrieben. Der erste Mover 200 kann eine quadratische, runde oder rechteckige Form oder auch andere Formen aufweisen. Der erste Mover 200 kann beispielsweise eine Größe im Bereich von 100mm x 100mm bis zu 200mm x 200mm aufweisen. Der erste Mover 200 kann eine Dicke im Bereich von 8mm bis 20mm aufweisen. Die Antriebsfläche 510, d. h. das Statormodul 10, und der erste Mover 200 können ausgebildet sein, um den ersten Mover 200 mit einer Geschwindigkeit von z. B. 1m/s bis 6m/s zu bewegen. Die Antriebsfläche 510, d. h. das Statormodul 10, und der erste Mover 200 können ausgebildet sein, um den ersten Mover 200 mit einer Beschleunigung von bis zu 30m/s² oder mehr zu bewegen. Zudem kann der erste Mover 200 ausgebildet sein, um Ladegut von bis zu 1,5kg oder mehr zu tragen. Zudem kann der erste Mover 200 ausgebildet sein, um mit einem Abstand zur Antriebsfläche 510 von bis zu 6mm oder mehr bewegt zu werden. Der zweite Mover 513 und/oder der dritte Mover 514 kann identisch zum ersten Mover 200 ausgebildet sein.

Weiterhin ist zusätzlich ein statisches Hindernis 509 auf der Antriebsfläche 510 angeordnet. Die Steuereinheit 506 ist mit einem Datenspeicher 512 verbunden und steht direkt oder indirekt mit den Magnetfelderzeugern der Sektoren 501 in Verbindung. Zudem ist die Steuereinheit 506 mit Sensoren 560 der Antriebsfläche 510 verbunden, die beispielsweise eine aktuelle Position der Mover 5, eine aktuelle Geschwindigkeit der Mover 5, eine aktuelle Beschleunigung der Mover 5 und/oder eine aktuelle Bewegungsrichtung der Mover 5 und/oder eine Beladung der Mover mit Ladegut 5 erfassen und an die Steuereinheit 506 weiterleiten.

Zudem kann die Steuereinheit 506 im Datenspeicher 512 Informationen über geplante bzw. berechnete Positionen der Mover 5, berechnete Werte für die Geschwindigkeiten der Mover 5, berechnete Werte für die Beschleunigungen der Mover 5 und/oder berechnete Werte für Bewegungsrichtungen der Mover 5 und/oder ein Beladungszustand der Mover 5 und/oder ein Gewicht der Beladung der Mover 5 und/oder ein Gewicht des Movers 5 und/oder Werte für maximale Beschleunigungen der Mover 5 abgespeichert sein.

Weiterhin kann im Datenspeicher 512 für jeden Mover 5 eine Priorität abgelegt sein. Die Priorität eines Movers 5 kann z. B. von einem Betriebszustand oder einer Eigenschaft des Movers 5 abhängen. Beispielsweise kann die Priorität eines Movers 5 von einer Geschwindigkeit des Movers 5 abhängen, wobei die Priorität mit der Höhe der Geschwindigkeit zunimmt. Weiterhin kann die Priorität des Movers 5 mit Abnahme eines Abstandes zu einem Zielpunkt 508, 516 des Movers 5 zunehmen. Zudem kann die Priorität eines Movers 5 umso größer sein, je größer ein minimaler möglicher Kurvenradius des Movers 5 ist. Weiterhin kann die Priorität eines Movers 5 von einem Gewicht des Movers 5, insbesondere von einer Beladung des Movers 5 mit einem Ladegut abhängen, wobei die Priorität umso größer ist, je größer das Gewicht des Ladeguts ist. Zudem kann die Priorität des Movers 5 von der Art des Ladeguts abhängen. Beispielsweise kann ein Mover 5 mit einem flüssigen Ladegut eine höhere Priorität als ein Mover 5 mit einem Ladegut aus einem Feststoff aufweisen. Zudem kann die Priorität des Movers 5 umso größer sein, je kleiner eine maximale Beschleunigung des Movers 5 ist.

Weiterhin kann die Priorität eines Movers 5 von einem Betriebszustand oder einer Eigenschaft eines Sektors 501 abhängen, auf dem sich der Mover 5 befindet. Die Priorität des Movers 5 kann z. B. von einer Temperatur des Sektors 501 abhängen, auf dem sich der Mover 5 befindet, wobei die Priorität mit der Höhe der Temperatur zunimmt. Zudem kann die Priorität des Movers 5 von einem Stromverbrauch des Sektors 501 abhängen. Weiterhin kann die Eigenschaft des Sektors darin liegen, wie schnell ein Magnetfeld aufgebaut werden kann und/oder welche Magnetfeldstärke vom Sektor 501 aufgebaut werden kann. Zudem kann jedem Mover 5 eine festgelegte Priorität zugeordnet sein, die z. B. von einer individuellen Kennung, beispielweise einer Zahl, des Movers 5 abhängt. Die Kennung ist z. B. im Datenspeicher 512 abgelegt. Jede Kennung ist nur einmal vorhanden. Somit kann mithilfe der Kennungen auf einfache Weise eine eindeutige Rangfolge der Prioritäten der Mover 5 festgelegt werden.

Die Priorität eines Movers 5 kann von der Steuereinheit 506 nach festgelegten Regeln ermittelt werden. Die Regeln können im Datenspeicher 512 abgelegt sein. Zudem kann die Priorität eines Movers 5 oder die Regel für die Festlegung der Priorität eines Movers 5 durch eine entsprechende Eingabe einer Bedienperson in die Steuereinheit 506 geändert werden.

Die Steuereinheit 506 ist ausgebildet, um abhängig von vorgegebenen Randbedingungen Fahrwege für die Mover 5 von den jeweiligen Startpunkten der Mover 5 zu den jeweiligen Zielpunkten der Mover 5 zu ermitteln. Dabei prüft die Steuereinheit 506 zuerst die Prioritäten der Mover 5. Die Prioritäten der Mover 5 können fest im Datenspeicher 512 abgelegt sein oder abhängig von weiteren Parametern aktuell vor der Ermittlung der Fahrwege ermittelt werden.

In den folgenden Ausführungen werden nur drei Mover 200, 513, 514 betrachtet. Die Kriterien für die Festlegung der Prioritäten sind so gewählt, dass die Prioritätsrelation der Mover 200, 513, 514 transitiv ist und somit eine eindeutige Rangordnung der Prioritäten für mehrere Mover 200, 513, 514 festgelegt wird. Daraus folgt, dass, wenn ein erster Mover 200 eine höhere Priorität als ein zweiter Mover 513 hat, und der zweite Mover 513 eine höhere Priorität als ein dritter Mover 514 hat, und somit auch der erste Mover 200 eine höhere Priorität als der dritte Mover 514 hat.

In einer Ausführungsform ermittelt die Steuereinheit 506 zuerst einen ersten Mover 200 mit der höchsten Priorität. Dann ermittelt die Steuereinheit 506 für den ersten Mover 200 den ersten Fahrweg 503 von dem ersten Startpunkt 507 des ersten Movers 200 zu dem ersten Zielpunkt 508 des ersten Movers 200 abhängig von vorgegebenen Randbedingungen. Dabei werden die Mover 5 mit einer niedrigeren Priorität und deren möglichen Fahrwege bei der Fahrwegplanung des ersten Movers 200 nicht berücksichtigt. Der Fahrweg beinhaltet einen Pfad und eine Information darüber, zu welchem Zeitpunkt sich der erste Mover 200 an welcher Position des Pfades befinden soll.

Dann ermittelt die Steuereinheit 506 einen zweiten Mover 513 mit der zweithöchsten Priorität. Dann ermittelt die Steuereinheit 506 einen zweiten Fahrweg von dem zweiten Startpunkt 515 des zweiten Movers 513 zu dem zweiten Zielpunkt 516 abhängig von vorgegebenen Randbedingungen. Dabei wird der erste Mover 200, der eine höhere Priorität als der zweite Mover 513 hat, und der erste Fahrweg 503 in der Weise berücksichtigt, dass der zweite Mover 513 dem ersten Mover 200 ausweicht und somit keine Kollision stattfindet. Bei der Fahrwegplanung für den zweiten Fahrweg werden weitere Mover 5, 514, die eine niedrigere Priorität als der zweite Mover 513 und deren Fahrwege nicht berücksichtigt. In analoger Weise werden für alle Mover 5 die Fahrwege ermittelt. Die Steuereinheit 506 führt eine Dynamikplanung durch und steuert die entsprechenden Magnetfelderzeuger der Sektoren 501 in der Weise an, dass die Mover 5 entsprechend den ermittelten Fahrwegen bewegt werden.

In einer weiteren Ausführungsform können die Fahrwege der Mover auch folgendermaßen ermittelt werden:
Die Steuereinheit 506 ermittelt abhängig von vorgegebenen Randbedingungen einen ersten Fahrweg 503 für den ersten Mover 200 von einem ersten Startpunkt 507 zu einem ersten Zielpunkt 508.

Zudem wird von der Steuereinheit 506 ein zweiter Fahrweg 517 für den zweiten Mover 513 ausgehend von einem zweiten Startpunkt 515 zum einem zweiten Zielpunkt 516 ermittelt. Der erste Fahrweg 503 beinhaltet einen ersten Pfad und eine Information darüber, zu welchem Zeitpunkt sich der erste Mover 200 an welcher Position des ersten Pfades befinden soll. Der zweite Fahrweg 517 beinhaltet einen zweiten Pfad und die Information, zu welchem Zeitpunkt sich der zweite Mover 513 an welcher Position des zweiten Pfades befinden soll. Für eine vereinfachte Darstellung ist der erste Fahrweg 503 in Form einer punktierten Linie mit einer Pfeilspitze in Richtung des ersten Zielpunktes 508dargestellt, die den ersten Pfad wiedergibt. Zudem ist für eine vereinfachte Darstellung des zweiten Fahrweges 517 der zweite Fahrweg 517 in Form einer gestrichelten Linie mit einer Pfeilspitze in Richtung des zweiten Zielpunktes 516dargestellt, die den zweiten Pfad wiedergibt.

Nachdem der erste und der zweite Fahrweg 503, 517 von der Steuereinheit 506 ermittelt wurden oder während der erste und der zweite Fahrweg ermittelt werden, wird von der Steuereinheit 506 überprüft, ob die Gefahr einer Kollision zwischen dem ersten und dem zweiten Mover 200, 513 besteht. Die Gefahr einer Kollision besteht dann, wenn der erste Mover 200 bei einem Abfahren des ersten Fahrweges 503 und der zweite Mover 513 beim Abfahren des zweiten Fahrweges 517 kollidieren würden. Ergibt die Überprüfung, dass keine Kollision zu erwarten ist, so führt die Steuereinheit 506 eine Dynamikplanung durch und steuert die entsprechenden Magnetfelderzeuger 127 der Sektoren 501 in der Weise an, dass der erste Mover 200 entsprechend dem ersten Fahrweg 503 und der zweite Mover 513 entsprechend dem zweiten Fahrweg 517 bewegt werden.

Ergibt jedoch die Überprüfung, dass eine Kollision zwischen dem ersten und dem zweiten Mover 200, 513 stattfinden würde, so wird die Priorität des ersten Movers 200 mit der Priorität des zweiten Movers 513 verglichen. Der erste bzw. zweite Mover 200, 513 mit der höheren Priorität hat Vorrang bei der Planung des Fahrweges 503, 517, so dass der erste bzw. zweite Mover 200, 513 mit der höheren Priorität den ermittelten Fahrweg 503, 517 beibehält. Für den ersten bzw. zweiten Mover 200, 513 mit der geringeren Priorität wird der Fahrweg 503, 517 entsprechend geändert, so dass keine Kollision stattfinden wird und trotzdem das Ziel möglichst gemäß den vorgegebenen Randbedingungen erreicht wird. Beispielsweise kann die Änderung des ersten bzw. zweiten Fahrweges 503, 517 aufgrund einer niedrigeren Priorität darin bestehen, dass der erste bzw. zweite Mover 200, 513 langsamer bewegt wird oder dass der erste bzw. zweite Mover 200, 513 einen anderen Pfad verwendet und somit eine Kollision zwischen dem ersten und zweiten Mover 200, 513 verhindert wird.

Weist beispielsweise der erste Mover 200 eine höhere Priorität als der zweite Mover 513 auf, so wird der zweite Fahrweg 517 des zweiten Movers 513 entsprechend geändert, so dass eine Kollision vermieden wird. Die Priorität kann abhängig von der gewählten Ausführungsform jeweils vor der Ermittlung der ersten bzw. zweiten Fahrwege 503, 517 von der Steuereinheit 506 nach vorgegebenen Regeln ermittelt werden oder es werden festgelegte Prioritäten von der Steuereinheit 506 aus dem Datenspeicher 512 ausgelesen.

Die Prioritäten der Mover 5 werden von der Steuereinheit 506 aus dem Datenspeicher 512 ausgelesen oder folgendermaßen bestimmt:
In einer einfachen Ausführungsform des Verfahrens sind die Prioritäten der Mover 5 eindeutig festgelegt und werden beispielsweise durch die den Movern 5 zugeordneten Kennungen, z. B. in Form von Zahlen, bestimmt. Bei dieser Ausführungsform weist beispielsweise der erste bzw. zweite Mover 200, 513 mit einer kleineren Zahl eine größere Priorität auf als ein erster bzw. zweiter Mover 200, 513 mit einer größeren Zahl.

In einer weiteren Ausführungsform können die Prioritäten der Mover 5 von mehreren Parametern abhängen und folgendermaßen von der Steuereinheit 506 bestimmt werden.

Beispielsweise kann bei einem Fokus auf Vermeidung hoher Temperaturen in den Sektoren 501 Prioritäten der Mover 5 folgendermaßen bestimmt werden:
Der Mover 5, der sich auf einem Sektor 501 mit einer höheren Temperatur oder auf einem Sektor 501 mit einer Temperatur oberhalb einer vorgegebenen kritischen Temperatur befindet, hat die höhere Priorität. Falls sich zumindest zwei Mover 5, also der erste Mover 200, der zweite Mover 513 und/oder der dritte Mover 514 auf einem Sektor 501 mit einer gleich hohen Temperatur oder auf einem Sektor 501 mit einer Temperatur über der vorgegebenen kritischen Temperatur befinden, so wird überprüft, welcher Mover 5 sich mit einer größeren Geschwindigkeit bewegt. Der Mover 5 mit der größeren Geschwindigkeit hat die höhere Priorität. Falls zumindest zwei Mover 5 eine gleich hohe aktuelle Geschwindigkeit aufweisen, so kann ein weiterer Parameter überprüft werden. Der weitere Parameter kann beispielsweise darin liegen, dass der Mover 5, der eine geringere Distanz zu seinem Zielpunkt 508, 516 aufweist, die höhere Priorität hat. Falls beispielsweise zumindest Mover 5 die gleiche Distanz zu ihrem jeweiligen Zielpunkt 508, 516 habe, so kann ein weiterer Parameter überprüft werden.

Beispielsweise kann der weitere Parameter die Kennung des Movers 5 sein. Somit weist der Mover 5 die höhere Priorität auf, der eine kleinere Kennung aufweist. Abhängig von der gewählten Ausführungsform kann auch der Mover 5 mit der höheren Kennung die höhere Priorität aufweisen.

In einem weiteren Verfahren, bei dem der trägere Mover 5 bei der Fahrwegplanung priorisiert wird, kann die Priorität nach folgender Vorgehensweise bestimmt werden: Zuerst wird überprüft, welcher der Mover 5 einen größeren minimalen Kurvenradius fahren muss. Der minimale Kurvenradius hängt von der aktuellen Geschwindigkeit, dem aktuellen Gewicht des Movers 5 mit Ladung und der zur Verfügung stehenden Kraft, mit der die Magnetfelderzeuger der Sektoren 501 auf den Mover 5 einwirken können, ab. Der Mover 5, der einen kleineren Kurvenradius fahren kann, weist die kleinere Priorität auf. Sollten zumindest zwei Mover 5 einen gleich großen minimalen Kurvenradius fahren können, so kann ein weiterer Parameter geprüft werden.

Der weitere Parameter besteht beispielsweise in der geringeren möglichen Maximalbeschleunigung. Somit wird festgelegt, dass der Mover 5, der mit einer geringeren maximalen Beschleunigung beschleunigt werden kann, die höhere Priorität aufweist. Die geringere mögliche Maximalbeschleunigung kann zum Beispiel von der Art des Movers 5, dem Gewicht des Movers 5, dem möglichen maximalen Magnetfeld des Sektors 501, auf dem sich der Mover 5 befindet, usw. abhängen. Können zumindest zwei Mover 5 mit der gleich großen möglichen Maximalbeschleunigung beschleunigt werden, so kann ein weiterer Parameter überprüft werden. Der weitere Parameter kann in der Distanz zu dem jeweiligen Zielpunkt 508, 516 des jeweiligen Movers 5 liegen. Beispielsweise weist der Mover 5 mit der geringeren Distanz zum jeweiligen Zielpunkt 508, 516 die höhere Priorität auf. Weisen zumindest zwei Mover 5 die gleiche Distanz zum jeweiligen Zielpunkt 508, 516 auf, so kann ein weiterer Parameter überprüft werden. Der weitere Parameter kann in der Kennung des Movers 5 liegen. Dem Mover 5 mit der kleineren Kennung wird die größere Priorität zugeordnet. Abhängig von der gewählten Ausführungsform kann auch dem Mover 5 mit der größeren Kennung die höhere Priorität zugeordnet werden. Somit wird auch für diese Vorgehensweise eindeutig eine Rangfolge der Prioritäten zwischen den Movern 5 festgelegt.

Eine weitere Vorgehensweise für die Festlegung der Prioritäten kann in einer Priorisierung abhängig von der Art der Nutzlast liegen. Ein möglicher Grund, unterschiedliche Nutzlasten unterschiedlich zu priorisieren kann beispielsweise darin liegen, dass Flüssigkeiten als Nutzlasten weniger geeignet sind, hohen Beschleunigungen und hohen Seitenkräften ausgesetzt zu werden. Somit kann es vorteilhaft sein, Mover 5 mit einer flüssigen Nutzlast höher zu priorisieren als Nutzlasten aus einem Feststoff, damit die Mover 5 mit flüssigen Nutzlasten ungestörter bewegt werden können als Mover 5 mit Feststoffen als Nutzlast.

Dabei wird dem Mover 5 mit der höher prioren Nutzlast die höhere Priorität zugeordnet. Dazu sind beispielsweise im Datenspeicher 512 Rangfolgen für die Nutzlasten und deren Prioritäten abgespeichert. Beispielsweise kann als Nutzlast ein Produkt B eine höhere Priorität als ein Produkt A aufweisen. Zudem weist das Produkt A eine größere Priorität als ein weiteres Produkt C als Nutzlast auf. Ergibt die Überprüfung, dass zumindest zwei Mover 5 eine gleich hoch priore Nutzlast tragen, so wird ein weiterer Parameter überprüft. Der weitere Parameter kann in der geringeren Distanz zum Zielpunkt 508, 516 des jeweiligen Movers 5 liegen. Sind die Distanzen der zumindest zwei Mover 5 zu den Zielpunkten 508, 516 identisch, so wird ein weiterer Parameter überprüft. Der weitere Parameter kann in der Kennung der Mover 5 liegen. Dabei wird dem Mover 5 mit der kleineren Kennung die höhere Priorität zugeordnet. Abhängig von der gewählten Ausführungsform kann auch dem Mover 5 mit der größeren Kennung eine höhere Priorität zugeordnet werden.

Abhängig von der gewählten Ausführungsform kann die Steuereinheit 506 beispielsweise bei der Fahrwegsplanung für den ersten Mover 200 die Fahrwege 517 anderer Mover 5, beispielsweise des zweiten Movers 513 oder des dritten Movers 514, ignorieren, die eine niedrigere Priorität als der erste Mover 200 aufweisen. Somit muss der erste Fahrweg 503 des ersten Movers 200 nicht angepasst werden, da bei der Fahrwegsplanung für den ersten Mover 200 die Fahrwege des zweiten und/oder dritten Movers 513, 514 nicht zu berücksichtigen sind.

Zudem können Mover 200, 513, 514 mit einer höheren Priorität bei der Fahrwegplanung als dynamische Hindernisse 519 berücksichtigt werden. Bei der Fahrwegsplanung für den zweiten Mover 513 wird dann jedoch der erste Fahrweg des ersten Mover 200 in der Art und Weise berücksichtigt, dass der zweite Fahrweg 517 derart angepasst wird, dass der erste Mover 200 aufgrund seiner höheren Priorität ungehindert den ersten Fahrweg 503 abfahren kann. Allgemein kann man sagen, dass die Mover 5, bzw. die Fahrwegsplanungen der Mover 5 mit höherer Priorität somit stets bei der Fahrwegplanung von Movern 5 mit einer niedrigeren Priorität berücksichtigt werden und die Steuereinheit 506 wählt einen Fahrweg 503, 517 für einen Mover 5 mit niedrigerer Priorität, um den anderen Movern 5 mit höherer Priorität auszuweichen.

Abhängig von der gewählten Ausführungsform kann abhängig von Betriebszuständen der Sektoren 501 zwischen verschiedenen Verfahren zum Festlegen der Prioritäten gewechselt werden.

Abhängig von der gewählten Ausführungsform berücksichtigt die Steuereinheit 506 bei der Fahrwegplanung eines Movers 5 nur Prioritäten von Movern 5, die sich in einem vorgegebenen festgelegten Umfeld zu dem Mover 5 befinden, für den die Fahrwegplanung durchgeführt wird. Das festgelegte Umfeld kann z. B. ein festgelegter radialer Abstand zu dem Mover 5 sein. Zudem kann das festgelegte Umfeld so gewählt werden, dass innerhalb eines vorgegebenen Zeithorizontes eine Kollision mit anderen Movern 5 außerhalb des festgelegten Umfeldes ausgeschlossen werden kann. Dadurch wird Rechenaufwand für die Steuereinheit 506 eingespart. Somit kann die Steuereinheit 506 bei einer Vielzahl von Movern 5 verschiedene lokale Prioritätslisten für die jeweiligen Umfelder der Mover 55 führen. Somit ist es nicht notwendig, dass eine globale eindeutige Prioritätsliste für alle Mover 5 abgelegt ist.

Zudem kann abhängig von der gewählten Ausführungsform die jeweilige Fahrwegplanung für die einzelnen Mover 5 in festgelegten Zeitabschnitten, das heißt in einem vorgegebenen Zyklus, wiederholt werden. Zudem kann die jeweilige Fahrwegplanung für die verschiedenen Mover 5 von verschiedenen Steuereinheiten 506, insbesondere von verschiedenen Kernen eines Multikernsystems, ausgeführt werden. Durch die eindeutigen Prioritäten der Mover 5 sind potentielle Konflikte eindeutig gelöst.

Durch die Berücksichtigung nur der Mover 5, die innerhalb eines vorgegebenen Umfeldes liegen, und/oder nur der Mover 5, die eine höhere Priorität aufweisen, wird die Fahrwegplanung für mehrere Mover 5 deutlich vereinfacht.

Die Positionen der Mover 5, die Geschwindigkeiten der Mover 5 und/oder die Beschleunigungen der Mover 5 können mit Sensoren 560 ermittelt werden, die den Sektoren 501 zugeordnet sind. Die Sensoren 560 können beispielsweise Magnetfeldsensoren, insbesondere Hall-Sensoren sein. Zudem kann die Position der Mover 5, die Geschwindigkeit der Mover 5 und/oder die Beschleunigungen der Mover 5 anhand der Ansteuerung der Magnetfelderzeuger 127 der Sektoren 501 abgeschätzt werden.

Nach der Erstellung der Fahrwege 503, 517 für die Mover 5 wird von der Steuereinheit 506 eine Dynamikplanung durchgeführt und festgelegt, mit welchen Magnetfeldern, mit welchen Magnetfelderzeugern 127 die Mover 5 zu welchen Zeitpunkten und an welchen Orten bewegt werden müssen, um den jeweiligen ermittelten Fahrweg 503, 517 einzuhalten. Anschließend werden von der Steuereinheit 506 die entsprechenden Magnetfelderzeuger 127 der Sektoren 501 gemäß der Dynamikplanung mit Strom versorgt, um die gewünschten Fahrwege 503, 517 der Mover 5 zu realisieren.

Mit dem beschriebenen Verfahren werden die Daten, die bei der Fahrwegplanung berücksichtigt werden müssen, deutlich reduziert. Somit ist eine bessere Skalierbarkeit des Systems auch für eine größere Anzahl von Movern 5 gegeben.

## Patentansprüche

1. Vorrichtung zum Vermeiden einer Kollision beim Antreiben einer Mehrzahl von Movern (5, 200, 513, 514) auf einer Antriebsfläche (510), wobei jeder Mover (5, 200, 513, 514) wenigstens einen Magnetfelderzeuger (250) aufweist, wobei die Vorrichtung mehrere Sektoren (501) aufweist, wobei die Sektoren (501) Magnetfelderzeuger (127) zum Erzeugen von Magnetfeldern aufweisen, wobei die Sektoren (501) die Antriebsfläche (510) bilden, wobei die Sektoren (501) mit zumindest einer Steuereinheit (506) verbunden sind, wobei die Steuereinheit (506) ausgebildet ist, um eine Fahrwegplanung für jeden Mover (5, 200, 513, 514) auszuführen, wobei jedem Mover (5, 200, 513, 514) eine Priorität zugeordnet ist, wobei die Steuereinheit (506) ausgebildet ist, um die Prioritäten der Mover (5, 200, 513, 514) bei der Fahrwegplanung der Fahrwege (503, 517) der Mover (5, 200, 513, 514) in der Weise zu berücksichtigen, dass ein Fahrweg eines Movers (5, 200, 513, 514) mit einer höheren Priorität Vorrang vor einem Fahrweg eines Movers (5, 200, 513, 514) mit einer niedrigeren Priorität hat, sodass eine Kollision der Mover (5, 200, 513, 514) vermieden wird, wobei die Steuereinheit (506) ausgebildet ist, um die Magnetfelderzeuger (127) der Sektoren (501) in der Weise mit Strom anzusteuern, dass die Mover (5, 200, 513, 514) entlang der ermittelten Fahrwege (503, 517) über die Antriebsfläche (510) bewegbar sind,
**dadurch gekennzeichnet,**
**dass** die Steuereinheit (506) ausgebildet ist, um bei der Fahrwegplanung eines Fahrweges (503) für einen Mover (200) nur die Fahrwege von weiteren Movern (513, 514) zu berücksichtigen, die eine höhere Priorität als der Mover (200), für den der Fahrweg geplant wird, aufweisen, und den Fahrweg des Movers (200) so zu planen, dass der Fahrweg des Movers (200) zu keiner Kollision mit den weiteren Movern (513, 514) mit der höheren Priorität führt.

2. Vorrichtung nach Anspruch 1, wobei die Priorität eines Movers (5, 200, 513, 514) von einem Betriebszustand oder einer Eigenschaft des Movers abhängt.

3. Vorrichtung nach Anspruch 2, wobei die Priorität des Movers (5, 200, 513, 514) von einer Geschwindigkeit des Movers (5, 200, 513, 514) abhängt, wobei die Priorität mit der Höhe der Geschwindigkeit zunimmt, und/oder wobei die Priorität des Movers (5, 200, 513, 514) umso größer ist, je geringer ein Abstand des Movers (5, 200, 513, 514) zu einem Zielpunkt (508, 516) ist, und/ oder wobei die Priorität des Movers (5, 200, 513, 514) umso größer ist, je größer ein minimaler möglicher Kurvenradius des Movers (5, 200, 513, 514), und/oder wobei die Priorität des Movers (5, 200, 513, 514) von einem Gewicht des Movers (5, 200, 513, 514), insbesondere von einem Ladegut des Movers (5, 200, 513, 514) abhängt, wobei insbesondere die Priorität umso größer ist, je größer das Gewicht des Movers (5, 200, 513, 514) mit Ladegut ist, und/ oder wobei die Priorität des Movers (5, 200, 513, 514) umso größer ist, je kleiner eine maximale Beschleunigung des Movers (5, 200, 513, 514) ist.

4. Vorrichtung nach einem der vorhergehenden Ansprüche, wobei die Priorität eines Movers (5, 200, 513, 514) von einem Betriebszustand oder einer Eigenschaft eines Sektors (501) abhängt, auf dem sich der Mover (5, 200, 513, 514) befindet.

5. Vorrichtung nach Anspruch 4, wobei die Priorität des Movers (5, 200, 513, 514) von einer Temperatur des Sektors (501) abhängt, auf dem sich der Mover (5, 200, 513, 514) befindet, wobei die Priorität mit der Höhe der Temperatur zunimmt, und/ oder wobei die Priorität des Movers (5, 200, 513, 514) von einem Stromverbrauch des Sektors (501) abhängt.

6. Vorrichtung nach einem der vorhergehenden Ansprüche, wobei jedem Mover (5, 200, 513, 514) eine individuelle Kennung zugeordnet ist, wobei die Priorität anhand der Kennung des Mover (5, 200, 513, 514) festgelegt ist.

7. Verfahren zum Vermeiden einer Kollision beim Ermitteln von Fahrwegen für eine Mehrzahl von Movern (5, 200, 513, 514) auf einer Antriebsfläche (510), wobei jeder Mover (5, 200, 513, 514) wenigstens einen Magnetfelderzeuger (250) aufweist, wobei eine Vorrichtung mehrere Sektoren (501) aufweist, wobei
die Sektoren (501) Magnetfelderzeuger (127) zum Erzeugen von Magnetfeldern aufweisen, wobei die Sektoren (501) die Antriebsfläche (510) bilden, wobei eine Fahrwegplanung für jeden Mover (5, 200, 513, 514) ausgeführt wird, wobei jedem Mover (5, 200, 513, 514) eine Priorität zugeordnet ist, wobei die Prioritäten der Mover (5, 200, 513, 514) bei der Fahrwegplanung der Fahrwege der Mover (5, 200, 513, 514) in der Weise berücksichtigt wird, dass ein Fahrweg (503) eines Movers (5, 200, 513, 514) mit einer höheren Priorität Vorrang vor einem Fahrweg (517) eines Movers (5, 200, 513, 514) mit einer niedrigeren Priorität hat, sodass eine Kollision der Mover (5, 200, 513, 514) vermieden wird, wobei die Magnetfelderzeuger (127) der Sektoren (501) in der Weise mit Strom angesteuert werden, dass die Mover (5, 200, 513, 514) entlang der ermittelten Fahrwege (503, 517) über die Antriebsfläche (510) bewegt werden, **dadurch gekennzeichnet,**
**dass** bei der Fahrwegplanung eines Fahrweges (503) für einen Mover (200) nur den die Fahrwege von weiteren Movern (513, 514) berücksichtigt werden, die eine höhere Priorität als der Mover (200), für den der Fahrweg geplant wird, aufweisen, wobei der Fahrweg des Movers (200) so geplant wird, dass der Fahrweg des Movers zu keiner Kollision mit den weiteren Movern (513, 514) mit der höheren Priorität führt.

8. Verfahren nach Anspruch 7, wobei die Priorität des Movers (5, 200, 513, 514) von einem Betriebszustand oder einer Eigenschaft des Movers (5, 200, 513, 514) abhängt.

9. Verfahren nach Anspruch 8, wobei die Priorität des Movers (5, 200, 513, 514) von einer Geschwindigkeit des Movers (5, 200, 513, 514) abhängt, wobei die Priorität mit der Höhe der Geschwindigkeit zunimmt, und/oder wobei die Priorität des Movers (5, 200, 513, 514) mit Abnahme eines Abstandes zu einem Zielpunkt (508, 516) des Movers (5, 200, 513, 514) zunimmt, und/oder wobei die Priorität des Movers (5, 200, 513, 514) umso größer ist, je größer ein minimaler möglicher Kurvenradius des Movers (5, 200, 513, 514) ist, und/oder wobei die Priorität des Movers (5, 200, 513, 514) von einem Gewicht des Movers (5, 200, 513, 514), insbesondere von einem Ladegut des Movers (5, 200, 513, 514) abhängt, wobei die Priorität umso größer ist, je größer das Gewicht des Movers (5, 200, 513, 514) mit dem Ladegut ist und/oder wobei die Priorität des Movers (5, 200, 513, 514) umso größer ist, je kleiner eine maximale mögliche Beschleunigung des Movers (5, 200, 513, 514) ist.

10. Verfahren nach einem der Ansprüche 7 bis 9, wobei die Priorität eines Movers (5, 200, 513, 514) von einem Betriebszustand oder einer Eigenschaft eines Sektors (501) abhängt, auf dem sich der Mover (5, 200, 513, 514) befindet.

11. Verfahren nach Anspruch 10, wobei die Priorität des Movers (5, 200, 513, 514) von einer Temperatur des Sektors (501) abhängt, auf dem sich der Mover (5, 200, 513, 514) befindet, wobei die Priorität mit der Höhe der Temperatur zunimmt, und/oder wobei die Priorität des Movers (5, 200, 513, 514) von einem Stromverbrauch des Sektors (501) abhängt.

12. Verfahren nach einem der Ansprüche 7 bis 11, wobei jedem Mover (5, 200, 513, 514) eine individuelle Kennung zugeordnet ist, wobei die Priorität anhand der Kennung des Mover (5, 200, 513, 514) festgelegt ist.

13. Steuereinheit (506), die ausgebildet ist, ein Verfahren nach einem der Ansprüche 7 bis 12 auszuführen.

14. Computerprogramm mit Befehlen, die beim Ablaufen auf einem Computer ein Verfahren nach einem der Ansprüche 7 bis 12 ausführen.

## Claims

1. Device for preventing a collision when driving a plurality of movers (5, 200, 513, 514) on a driving surface (510), wherein each mover (5, 200, 513, 514) has at least one magnetic field generator (250), wherein the device has several sectors (501), wherein the sectors (501) have magnetic field generators (127) for generating magnetic fields, wherein the sectors (501) form the driving surface (510), wherein the sectors (501) are connected to at least one control unit (506), wherein the control unit (506) is designed to execute a route plan for each mover (5, 200, 513, 514), wherein a priority is assigned to each mover (5, 200, 513, 514), wherein the control unit (506) is designed to take into account the priorities of the movers (5, 200, 513, 514) when planning the routes (503, 517) of the movers (5, 200, 513, 514) in such a way that a route of a mover (5, 200, 513, 514) with a higher priority takes precedence over a route of a mover (5, 200, 513, 514) with a lower priority, so that a collision between the movers (5, 200, 513, 514) is prevented, wherein the control unit (506) is designed to drive the magnetic field generators (127) of the sectors (501) with electrical power in such a way that the movers (5, 200, 513, 514) can be moved over the driving surface (510) along the determined routes (503, 517), **characterized**
**in that** the control unit (506) is designed, when planning a route (503) for a mover (200), to take into account only the routes of further movers (513, 514) which have a higher priority than the movers (200) for which the route is planned, and to plan the route of the mover (200) such that the route of the mover (200) does not lead to a collision with the further movers (513, 514) with the higher priority.

2. Device according to Claim 1, wherein the priority of a mover (5, 200, 513, 514) depends on an operating state or a property of the mover.

3. Device according to Claim 2, wherein the priority of the mover (5, 200, 513, 514) depends on a speed of the mover (5, 200, 513, 514), wherein the priority increases with the speed level, and/or wherein the smaller a distance between the mover (5, 200, 513, 514) and a destination point (508, 516), the greater the priority of the mover (5, 200, 513, 514), and/or wherein the greater a minimum possible radius of curvature of the mover (5, 200, 513, 514), the greater the priority of the mover (5, 200, 513, 514), and/or wherein the priority of the mover (5, 200, 513, 514) depends on a weight of the mover (5, 200, 513, 514), in particular on a load of the mover (5, 200, 513, 514), wherein in particular the greater the weight of the mover (5, 200, 513, 514) with the load, the greater the priority, and/or wherein the smaller a maximum acceleration of the mover (5, 200, 513, 514), the greater the priority of the mover (5, 200, 513, 514) .

4. Device according to one of the preceding claims, wherein the priority of a mover (5, 200, 513, 514) depends on an operating state or a property of a sector (501) on which the mover (5, 200, 513, 514) is located.

5. Device according to Claim 4, wherein the priority of the mover (5, 200, 513, 514) depends on a temperature of the sector (501) on which the mover (5, 200, 513, 514) is located, wherein the priority increases with the temperature level, and/or wherein the priority of the mover (5, 200, 513, 514) depends on an electrical power consumption of the sector (501).

6. Device according to one of the preceding claims, wherein an individual identifier is assigned to each mover (5, 200, 513, 514), wherein the priority is established on the basis of the identifier of the mover (5, 200, 513, 514).

7. Method for preventing a collision when determining routes for a plurality of movers (5, 200, 513, 514) on a driving surface (510), wherein each mover (5, 200, 513, 514) has at least one magnetic field generator (250), wherein a device has several sectors (501), wherein the sectors (501) have magnetic field generators (127) for generating magnetic fields, wherein the sectors (501) form the driving surface (510), wherein a route plan is executed for each mover (5, 200, 513, 514), wherein a priority is assigned to each mover (5, 200, 513, 514), wherein the priorities of the movers (5, 200, 513, 514) are taken into account when planning the routes of the movers (5, 200, 513, 514) in such a way that a route (503) of a mover (5, 200, 513, 514) with a higher priority takes precedence over a route (517) of a mover (5, 200, 513, 514) with a lower priority, so that a collision between the movers (5, 200, 513, 514) is prevented, wherein the magnetic field generators (127) of the sectors (501) are driven with electrical power in such a way that the movers (5, 200, 513, 514) are moved over the driving surface (510) along the determined routes (503, 517),
**characterized**
**in that**, when planning a route (503) for a mover (200), only the routes of further movers (513, 514) which have a higher priority than the mover (200) for which the route is planned are taken into account, wherein the route of the mover (200) is planned such that the route of the mover does not lead to a collision with the further movers (513, 514) with the higher priority.

8. Method according to Claim 7, wherein the priority of the mover (5, 200, 513, 514) depends on an operating state or a property of the mover (5, 200, 513, 514).

9. Method according to Claim 8, wherein the priority of the mover (5, 200, 513, 514) depends on a speed of the mover (5, 200, 513, 514), wherein the priority increases with the speed level, and/or wherein the priority of the mover (5, 200, 513, 514) increases as the distance from a destination point (508, 516) of the mover (5, 200, 513, 514) decreases, and/or wherein the greater a minimum possible radius of curvature of the mover (5, 200, 513, 514), the greater the priority of the mover (5, 200, 513, 514), and/or wherein the priority of the mover (5, 200, 513, 514) depends on a weight of the mover (5, 200, 513, 514), in particular on a load of the mover (5, 200, 513, 514), wherein the greater the weight of the mover (5, 200, 513, 514) with the load, the greater the priority, and/or wherein the smaller a maximum possible acceleration of the mover (5, 200, 513, 514), the greater the priority of the mover (5, 200, 513, 514).

10. Method according to one of Claims 7 to 9, wherein the priority of a mover (5, 200, 513, 514) depends on an operating state or a property of a sector (501) on which the mover (5, 200, 513, 514) is located.

11. Method according to Claim 10, wherein the priority of the mover (5, 200, 513, 514) depends on a temperature of the sector (501) on which the mover (5, 200, 513, 514) is located, wherein the priority increases with the temperature level, and/or wherein the priority of the mover (5, 200, 513, 514) depends on an electrical power consumption of the sector (501).

12. Method according to one of the preceding Claims 7 to 11, wherein an individual identifier is assigned to each mover (5, 200, 513, 514), wherein the priority is established on the basis of the identifier of the mover (5, 200, 513, 514).

13. Control unit (506) which is designed to execute a method according to one of Claims 7 to 12.

14. Computer program containing instructions which execute a method according to one of Claims 7 to 12 when run on a computer.

## Revendications

1. Dispositif permettant d'éviter une collision lors de l'entraînement d'une pluralité d'éléments de déplacement (5, 200, 513, 514) sur une surface d'entraînement (510), chaque élément de déplacement (5, 200, 513, 514) présentant au moins un générateur de champ magnétique (250), le dispositif présentant plusieurs secteurs (501), les secteurs (501) présentant des générateurs de champ magnétique (127) pour générer des champs magnétiques, les secteurs (501) constituant la surface d'entraînement (510), les secteurs (501) étant reliés à au moins une unité de commande (506), l'unité de commande (506) étant réalisée pour effectuer une planification de trajectoire pour chaque élément de déplacement (5, 200, 513, 514), une priorité étant associée à chaque élément de déplacement (5, 200, 513, 514), l'unité de commande (506) étant réalisée pour prendre en compte les priorités des éléments de déplacement (5, 200, 513, 514) lors de la planification de trajectoire des trajectoires (503, 517) des éléments de déplacement (5, 200, 513, 514) de telle sorte qu'une trajectoire d'un élément de déplacement (5, 200, 513, 514) ayant une priorité plus élevée est prioritaire par rapport à une trajectoire d'un élément de déplacement (5, 200, 513, 514) ayant une priorité moins élevée de façon à éviter une collision des éléments de déplacement (5, 200, 513, 514), l'unité de commande (506) étant réalisée pour effectuer un pilotage électrique des générateurs de champ magnétique (127) des secteurs (501) de façon à pouvoir déplacer les éléments de déplacement (5, 200, 513, 514) le long des trajectoires déterminées (503, 517) sur la surface d'entraînement (510),
**caractérisé en ce que** l'unité de commande (506) est réalisée pour ne prendre en compte lors de la planification de trajectoire d'une trajectoire (503) pour un élément de déplacement (200) que les trajectoires d'autres éléments de déplacement (513, 514) qui présentent une priorité plus élevée que celle de l'élément de déplacement (200) pour lequel la trajectoire est en cours de planification, et pour planifier la trajectoire de l'élément de déplacement (200) de telle sorte que la trajectoire de l'élément de déplacement (200) n'entraîne aucune collision avec les autres éléments de déplacement (513, 514) ayant la priorité plus élevée.

2. Dispositif selon la revendication 1, dans lequel la priorité d'un élément de déplacement (5, 200, 513, 514) dépend d'un état de fonctionnement ou d'une propriété de l'élément de déplacement.

3. Dispositif selon la revendication 2, dans lequel la priorité de l'élément de déplacement (5, 200, 513, 514) dépend d'une vitesse de l'élément de déplacement (5, 200, 513, 514), la priorité augmentant avec le niveau de la vitesse, et/ou la priorité de l'élément de déplacement (5, 200, 513, 514) étant d'autant plus élevée qu'une distance de l'élément de déplacement (5, 200, 513, 514) par rapport à un lieu de destination (508, 516) est faible, et/ou la priorité de l'élément de déplacement (5, 200, 513, 514) étant d'autant plus élevée qu'un rayon de courbure possible minimal de l'élément de déplacement (5, 200, 513, 514) est grand, et/ou la priorité de l'élément de déplacement (5, 200, 513, 514) dépendant d'un poids de l'élément de déplacement (5, 200, 513, 514), en particulier d'un chargement de l'élément de déplacement (5, 200, 513, 514), dans lequel en particulier la priorité est d'autant plus élevée que le poids de l'élément de déplacement (5, 200, 513, 514) avec le chargement est élevé, et/ou la priorité de l'élément de déplacement (5, 200, 513, 514) étant d'autant plus élevée qu'une accélération maximale de l'élément de déplacement (5, 200, 513, 514) est faible.

4. Dispositif selon l'une quelconque des revendications précédentes, dans lequel la priorité d'un élément de déplacement (5, 200, 513, 514) dépend d'un état de fonctionnement ou d'une propriété d'un secteur (501) sur lequel se trouve l'élément de déplacement (5, 200, 513, 514).

5. Dispositif selon la revendication 4, dans lequel la priorité de l'élément de déplacement (5, 200, 513, 514) dépend d'une température du secteur (501) sur lequel se trouve l'élément de déplacement (5, 200, 513, 514), la priorité augmentant avec le niveau de la température, et/ ou la priorité de l'élément de déplacement (5, 200, 513, 514) dépendant d'une consommation électrique du secteur (501).

6. Dispositif selon l'une quelconque des revendications précédentes, dans lequel un identifiant individuel est associé à chaque élément de déplacement (5, 200, 513, 514), la priorité étant définie à l'aide de l'identifiant de l'élément de déplacement (5, 200, 513, 514).

7. Procédé permettant d'éviter une collision lors de la détermination de trajectoires pour une pluralité d'éléments de déplacement (5, 200, 513, 514) sur une surface d'entraînement (510), chaque élément de déplacement (5, 200, 513, 514) présentant au moins un générateur de champ magnétique (250), un dispositif présentant plusieurs secteurs (501), les secteurs (501) présentant des générateurs de champ magnétique (127) pour générer des champs magnétiques, les secteurs (501) constituant la surface d'entraînement (510), une planification de trajectoire étant effectuée pour chaque élément de déplacement (5, 200, 513, 514), une priorité étant associée à chaque élément de déplacement (5, 200, 513, 514), les priorités des éléments de déplacement (5, 200, 513, 514) étant prises en compte lors de la planification de trajectoire des trajectoires des éléments de déplacement (5, 200, 513, 514) de telle sorte qu'une trajectoire (503) d'un élément de déplacement (5, 200, 513, 514) ayant une priorité plus élevée est prioritaire par rapport à une trajectoire (517) d'un élément de déplacement (5, 200, 513, 514) ayant une priorité moins élevée de façon à éviter une collision des éléments de déplacement (5, 200, 513, 514), les générateurs de champ magnétique (127) des secteurs (501) étant pilotés par électricité de telle sorte que les éléments de déplacement (5, 200, 513, 514) sont déplacés le long des trajectoires déterminées (503, 517) sur la surface d'entraînement (510),
**caractérisé en ce que** lors de la planification de trajectoire d'une trajectoire (503) pour un élément de déplacement (200) ne sont prises en compte que les trajectoires d'autres éléments de déplacement (513, 514) qui présentent une priorité plus élevée que celle de l'élément de déplacement (200) pour lequel la trajectoire est en cours de planification, la trajectoire de l'élément de déplacement (200) étant planifiée de telle sorte que la trajectoire de l'élément de déplacement n'entraîne aucune collision avec les autres éléments de déplacement (513, 514) ayant une priorité plus élevée.

8. Procédé selon la revendication 7, dans lequel la priorité de l'élément de déplacement (5, 200, 513, 514) dépend d'un état de fonctionnement ou d'une propriété de l'élément de déplacement (5, 200, 513, 514).

9. Procédé selon la revendication 8, dans lequel la priorité de l'élément de déplacement (5, 200, 513, 514) dépend d'une vitesse de l'élément de déplacement (5, 200, 513, 514), la priorité augmentant avec le niveau de la vitesse, et/ou la priorité de l'élément de déplacement (5, 200, 513, 514) augmentant avec la diminution d'une distance par rapport à un lieu de destination (508, 516) de l'élément de déplacement (5, 200, 513, 514), et/ou la priorité de l'élément de déplacement (5, 200, 513, 514) étant d'autant plus élevée qu'un rayon de courbure possible minimal de l'élément de déplacement (5, 200, 513, 514) est grand, et/ou la priorité de l'élément de déplacement (5, 200, 513, 514) dépendant d'un poids de l'élément de déplacement (5, 200, 513, 514), en particulier d'un chargement de l'élément de déplacement (5, 200, 513, 514), dans lequel en particulier la priorité est d'autant plus élevée que le poids de l'élément de déplacement (5, 200, 513, 514) avec le chargement est grand, et/ou la priorité de l'élément de déplacement (5, 200, 513, 514) étant d'autant plus élevée qu'une accélération possible maximale de l'élément de déplacement (5, 200, 513, 514) est faible.

10. Procédé selon l'une quelconque des revendications 7 à 9, dans lequel la priorité d'un élément de déplacement (5, 200, 513, 514) dépend d'un état de fonctionnement ou d'une propriété d'un secteur (501) sur lequel se trouve l'élément de déplacement (5, 200, 513, 514).

11. Procédé selon la revendication 10, dans lequel la priorité de l'élément de déplacement (5, 200, 513, 514) dépend d'une température du secteur (501) sur lequel se trouve l'élément de déplacement (5, 200, 513, 514), la priorité augmentant avec le niveau de la température, et/ou la priorité de l'élément de déplacement (5, 200, 513, 514) dépendant d'une consommation électrique du secteur (501).

12. Procédé selon l'une quelconque des revendications 7 à 11, dans lequel un identifiant individuel est associé à chaque élément de déplacement (5, 200, 513, 514), la priorité étant définie à l'aide de l'identifiant de l'élément de déplacement (5, 200, 513, 514) .

13. Unité de commande (506) qui est réalisée pour exécuter un procédé selon l'une quelconque des revendications 7 à 12.

14. Programme informatique comprenant des instructions qui, lorsqu'elles sont mises en œuvre sur un ordinateur, exécutent un procédé selon l'une quelconque des revendications 7 à 12.
